# EUROPEAN PATENT APPLICATION

(11) **EP 4 412 373 A1**
(43) Date of publication of application: **07.08.2024**
(21) Application number: 22875021.2
(22) Date of filing: 28.09.2022
(51) Int. Cl.: H04W 72/12

(54) **UE CAPABILITY REPORTING METHOD, JOINT SCHEDULING METHOD, SCHEDULING METHOD, AND DEVICE**

(30) Priority: 30.09.2021 CN 202111162899; 09.10.2021 CN 202111178354
(71) Applicant: Vivo Mobile Communication Co., Ltd., Dongguan, Guangdong 523863 (CN)
(72) Inventor: LIU, Siqi, Dongguan, Guangdong 523863 (CN); LI, Gen, Dongguan, Guangdong 523863 (CN); JI, Zichao, Dongguan, Guangdong 523863 (CN)
(74) Representative: Conti, Marco
(86) International application number: PCT/CN2022/122249
(87) International publication number: WO 2023/051638

(57) **Abstract**

Embodiments of this application disclose a UE capability reporting method, a joint scheduling method, a scheduling method, and a device, and pertain to the field of communication technologies. The UE capability reporting method in the embodiments of this application includes: A terminal sends UE capability information to a network side device, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell.

## Description

### CROSS-REFERENCE TO RELATED APPLICATIONS

The present invention claims priorities to Chinese Patent Application No. 202111162899.3, filed with the China National Intellectual Property Administration on September 30, 2021 and entitled "JOINT SCHEDULING METHOD AND DEVICE", and to Chinese Patent Application No. 202111178354.1, filed with the China National Intellectual Property Administration on October 9, 2021 and entitled "JOINT SCHEDULING METHOD AND DEVICE", both of which are incorporated herein by reference in their entireties.

### TECHNICAL FIELD

This application pertains to the field of communication technologies, and specifically relates to a UE capability reporting method, a joint scheduling method, a scheduling method, and a device. The device may include a UE capability reporting apparatus, a joint scheduling apparatus, a scheduling apparatus, a terminal, a network side device, or the like.

### BACKGROUND

In a related technology, each piece of control information can be used to schedule transmission on only one cell (or carrier) at a time, which brings high overheads of control information about some cells and affects a system capacity. To solve the problem of high overheads of control information, in the related technology, it is proposed to simultaneously schedule transmission on a plurality of cells by using one piece of control information, to reduce overheads of the control information. It needs to determine which control information transmitted by a control resource set may be used to schedule the plurality of cells, to avoid a transmission problem caused by inconsistent understanding of the control resource set by a terminal or a network side device, which affects communication performance.

### SUMMARY

Embodiments of this application provide a joint scheduling method and a device, which can resolve a problem that transmission is affected due to inconsistent understanding of a control resource set by a terminal or a network side device.

According to a first aspect, a joint scheduling method is provided, including: A terminal determines a target control resource set; and the terminal transmits joint control information based on the target control resource set, where the target control resource set is used by a scheduling object to send joint control information, the joint control information is used to schedule a scheduled object combination, and the scheduled object combination includes one or more scheduled objects.

According to a second aspect, a joint scheduling method is provided, including: A network side device configures a target control resource set for a terminal, where the target control resource set is used by a scheduling object to send joint control information, the joint control information is used to schedule a scheduled object combination, and the scheduled object combination includes one or more scheduled objects.

According to a third aspect, a scheduling method is provided, including: A terminal determines a monitoring capability corresponding to a first object and/or a monitoring capability corresponding to a second object, where the first object can be scheduled by the second object, and the first object can be scheduled by at least two objects; and the terminal performs monitoring based on the determined monitoring capability.

According to a fourth aspect, a scheduling method is provided, including: A network side device configures a monitoring capability corresponding to a first object and/or a monitoring capability corresponding to a second object for a terminal, where the first object can be scheduled by the second object, and the first object can be scheduled by at least two objects.

According to a fifth aspect, a UE capability reporting method is provided, including: A terminal sends UE capability information to a network side device, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell.

According to a sixth aspect, a UE capability reporting method is provided, including: A network side device receives UE capability information from a terminal side, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell; and the network side device provides scheduling configuration for the terminal based on the UE capability information.

According to a seventh aspect, a joint scheduling apparatus is provided, including: a determining module, configured to determine a target control resource set; and a transmission module, configured to transmit joint control information based on the target control resource set, where the target control resource set is used by a scheduling object to send joint control information, the joint control information is used to schedule a scheduled object combination, and the scheduled object combination includes one or more scheduled objects.

According to an eighth aspect, a joint scheduling apparatus is provided, including: a configuration module, used to configure a target control resource set for a terminal, where the target control resource set is used by a scheduling object to send joint control information, the joint control information is used to schedule a scheduled object combination, and the scheduled object combination includes one or more scheduled objects.

According to a ninth aspect, a scheduling apparatus is provided, including: a determining module, configured to determine a monitoring capability corresponding to a first object and/or a monitoring capability corresponding to a second object, where the first object can be scheduled by the second object, and the first object can be scheduled by at least two objects; and a monitoring module, configured to perform monitoring based on the determined monitoring capability.

According to a tenth aspect, a scheduling apparatus is provided, including: a configuration module, used to configure a monitoring capability corresponding to a first object and/or a monitoring capability corresponding to a second object for a terminal, where the first object can be scheduled by the second object, and the first object can be scheduled by at least two objects.

According to an eleventh aspect, a UE capability reporting apparatus is provided, including: a sending module, configured to send UE capability information to a network side device, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell.

According to a twelfth aspect, a UE capability reporting apparatus is provided, including: a receiving module, configured to receive UE capability information from a terminal side, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell; and a configuration module, configured to provide scheduling configuration for the terminal based on the UE capability information.

According to a thirteenth aspect, a terminal is provided, and the terminal includes a processor, a memory, and a program or an instruction that is stored in the memory and that can be run on the processor, where when the program or the instruction is executed by the processor, the method according to the first aspect, the third aspect, or the fifth aspect is implemented.

According to a fourteenth aspect, a terminal is provided, including a processor and a communication interface, where the processor is configured to determine a target control resource set, and the communication interface is configured to transmit joint control information based on the target control resource set; and the target control resource set is used by a scheduling object to send joint control information, the joint control information is used to schedule a scheduled object combination, and the scheduled object combination includes one or more scheduled objects. Alternatively, the processor is configured to determine a monitoring capability corresponding to a first object and/or a monitoring capability corresponding to a second object, where the first object can be scheduled by the second object, and the first object can be scheduled by at least two objects; and the communication interface is configured to perform monitoring based on the determined monitoring capability.

According to a fifteenth aspect, a network side device is provided, and the network side device includes a processor, a memory, and a program or an instruction that is stored in the memory and that can be run on the processor, where when the program or the instruction is executed by the processor, the method according to the second aspect, the fourth aspect, or the sixth aspect is implemented.

According to a sixteenth aspect, a network side device is provided, including a processor and a communication interface, where the communication interface is used to configure a target control resource set for a terminal, the target control resource set is used by a scheduling object to send joint control information, the joint control information is used to schedule a scheduled object combination, and the scheduled object combination includes one or more scheduled objects. Alternatively, the communication interface is used to configure a monitoring capability corresponding to a first object and/or a monitoring capability corresponding to a second object for a terminal, where the first object can be scheduled by the second object, and the first object can be scheduled by at least two objects.

According to a seventeenth aspect, a readable storage medium is provided, where the readable storage medium stores a program or an instruction, and when the program or the instruction is executed by a processor, the method according to any one of the first aspect to the sixth aspect is implemented.

According to an eighteenth aspect, a chip is provided, where the chip includes a processor and a communication interface, the communication interface is coupled to the processor, and the processor is configured to run a program or an instruction to implement the method according to any one of the first aspect to the sixth aspect.

According to a nineteenth aspect, a computer program/program product is provided, where the computer program/program product is stored in a non-transient storage medium, and the program/program product is executed by at least one processor to implement the method according to any one of the first aspect to the sixth aspect.

In the embodiments of this application, a terminal determines a target control resource set, and transmits joint control information based on the target control resource set, where the target control resource set is used by a scheduling object to send joint control information, the joint control information is used to schedule a scheduled object combination, and the scheduled object combination includes one or more scheduled objects. The embodiments of this application help to keep behavior of a terminal and a network side device consistent on how to transmit joint control information, avoid missed and incorrect detection of the joint control information, and improve communication effectiveness.

### BRIEF DESCRIPTION OF DRAWINGS

FIG. 1 is a schematic diagram of a wireless communication system according to an embodiment of this application;
FIG. 2 is a schematic flowchart of a joint scheduling method according to an embodiment of this application;
FIG. 3 is a schematic flowchart of a joint scheduling method according to an embodiment of this application;
FIG. 4 is a schematic flowchart of a scheduling method according to an embodiment of this application;
FIG. 5 is a schematic flowchart of a scheduling method according to an embodiment of this application;
FIG. 6 is a schematic structural diagram of a joint scheduling apparatus according to an embodiment of this application;
FIG. 7 is a schematic structural diagram of a joint scheduling apparatus according to an embodiment of this application;
FIG. 8 is a schematic structural diagram of a scheduling apparatus according to an embodiment of this application;
FIG. 9 is a schematic structural diagram of a scheduling apparatus according to an embodiment of this application;
FIG. 10 is a schematic structural diagram of a communication device according to an embodiment of this application;
FIG. 11 is a schematic structural diagram of a terminal according to an embodiment of this application; and
FIG. 12 is a schematic structural diagram of a network side device according to an embodiment of this application.

### DESCRIPTION OF EMBODIMENTS

The following clearly describes technical solutions in embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and may also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and the NR term is used in most of the following descriptions, but these technologies can also be applied to an application other than an NR system application, for example, a 6th generation (6th Generation, 6G) communication system.

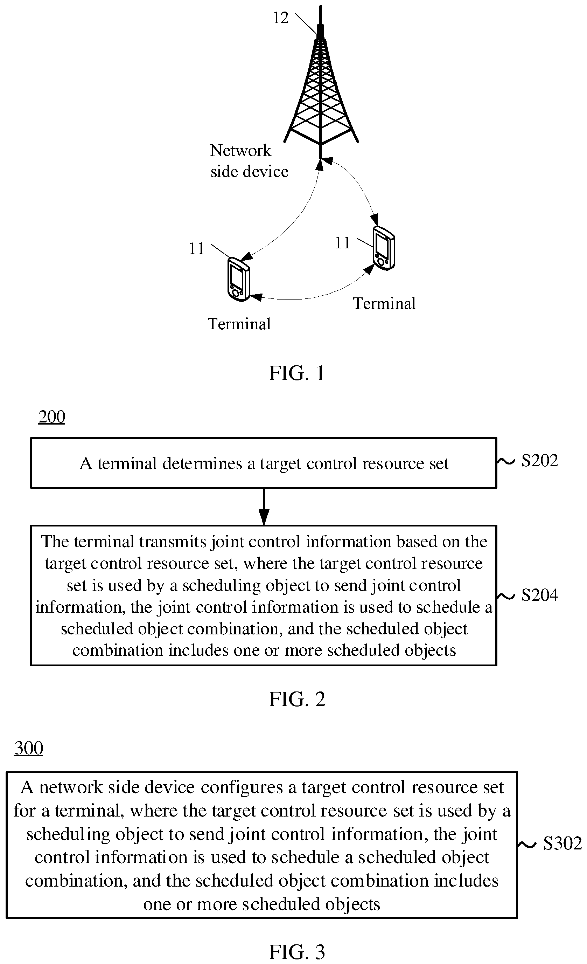

FIG. 1 is a schematic diagram of a wireless communication system to which an embodiment of this application can be applied. The wireless communication system includes terminals 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), or a smart home device (a home device having a wireless communication function, such as a refrigerator, a television, a washing machine, or a furniture). The wearable device includes a smart watch, a smart band, a smart headset, smart glasses, smart jewelry (a smart bracelet, a smart hand chain, a smart ring, a smart necklace, a smart anklet, and a smart anklet chain), a smart wristband, smart clothes, a game console, and the like. It should be noted that a specific type of the terminal 11 is not limited in this embodiment of this application. The network side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a next generation NodeB (gNB), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or another specific appropriate term in the art. As long as a same technical effect is achieved, the base station is not limited to a specified technical term. It should be noted that, in the embodiments of this application, only a base station in an NR system is used as an example, but a specific type of the base station is not limited.

An embodiment of this application provides a joint scheduling method. A terminal may determine a control resource set (the control resource set may be a search space or the like). A network side device may configure the control resource set for the terminal, so that understanding of a transceiver end (for example, a terminal and a network side device as well as a terminal and a terminal) on the control resource set that can be used to transmit joint control information is consistent.

The joint control information may be control information that schedules or indicates a plurality of objects, or may be control information about a scheduling information field that includes a plurality of objects. The joint control information may be joint downlink control information (Downlink Control Information, DCI), joint sidelink control information (Sidelink Control Information, SCI), or the like. A control resource set in which joint control information is located may also be referred to as a joint control resource set such as a joint search space (Search Space, SS).

It should be noted that "associated" mentioned in the embodiments of this application may be understood as a broad concept, and may be interpreted as including, indicating, corresponding, or the like.

With reference to the accompanying drawings, the following describes in detail a joint scheduling method and a device provided in the embodiments of this application by using some embodiments and application scenarios thereof.

As shown in FIG. 2, an embodiment of this application provides a joint scheduling method 200. The method may be performed by a terminal. In other words, the method may be performed by software or hardware installed in the terminal. The method includes the following steps.

S202: The terminal determines a target control resource set.

S204: The terminal transmits joint control information based on the target control resource set, where the target control resource set is used by a scheduling object to send joint control information, the joint control information is used to schedule a scheduled object combination, and the scheduled object combination includes one or more scheduled objects.

The control resource set mentioned in the embodiments of this application, for example, a target control resource set, may include at least one of the following: a search space (Search Space, SS), a control resource set (Control Resource SET, CORESET), a monitoring occasion (monitoring occasion), a slot (slot), a time span (span), or the like.

The object mentioned in the embodiments of this application, for example, a scheduling object and a scheduled object, may be at least one of the following: a cell, a carrier, data, a signal, power control information, a resource format, a bandwidth part (Bandwidth Part, BWP), a resource pool, another control signal, or the like. In subsequent embodiments, a scheduling cell is used as an example to describe a scheduling object, and a scheduled cell is used as an example to describe a scheduled object.

In this embodiment, the network side device may configure or indicate the target control resource set for the terminal. In this way, in this embodiment, the terminal may obtain the target control resource set, and monitor, blindly detect, send, or receive the joint control information in the target control resource set.

The joint control information is used to schedule or indicate a scheduled object combination, and the scheduled object combination includes, for example, a carrier combination (carrier combination), a scheduled cell combination (scheduled cell combination), a scheduled cell pair (scheduled cell pair), and the like.

It should be noted that "transmitting" in S204 may be understood as a broad concept, and may include monitoring, blindly detecting, sending, receiving, or the like. Therefore, this embodiment may be applied to a transmit end terminal, or may be applied to a receive end terminal.

Application scenarios of the embodiments of this application may be classified into two types: Scenario 1: A network side device interacts with a terminal, the network side device usually serves as a transmit end, and the terminal usually serves as a receive end. Scenario 2: A network side device, a transmit end terminal, and a receive end terminal interact with each other. In Scenario 2, the network side device usually configures a target control resource set for the transmit end terminal and/or the receive end terminal, the transmit end terminal sends joint control information in the target control resource set, and the receive end terminal monitors, blindly detects, or receives the joint control information in the target control resource set. Alternatively, the network side device sends joint control information in a target control resource set; and the transmit end terminal monitors, blindly detects, or receives the joint control information in the target control resource set, and sends a signal or a channel to the receive end terminal based on an indicator or scheduling of the joint control information, for example, sending a sidelink signal or a channel.

In an example, this embodiment may be applied to a user-to-network universal interface (user-to-network universal interface, Uu) scenario. In this embodiment, a terminal obtains a target control resource set configured or indicated by a network side device, and monitors, blindly detects, or receives joint control information from the network side device in the target control resource set.

In another example, this embodiment may be applied to a UE-to-UE (UE-to-UE) scenario. In this embodiment, a terminal serving as a transmit end may obtain a target control resource set configured or indicated by a network side device, and send joint control information to the receive end terminal in the target control resource set.

In still another example, this embodiment may be applied to a UE-to-UE (UE-to-UE) scenario. In this embodiment, a terminal serving as a receive end may obtain a target control resource set configured or indicated by a network side device, or obtain a target control resource set configured or indicated by a transmit end terminal, and monitor, blindly detect, or receive joint control information from the transmit end terminal in the target control resource set.

According to the joint scheduling method provided in this embodiment of this application, a terminal determines a target control resource set, and transmits joint control information based on the target control resource set, where the target control resource set is used by a scheduling object to send joint control information, the joint control information is used to schedule a scheduled object combination, and the scheduled object combination includes one or more scheduled objects. This embodiment of this application helps to keep behavior of a terminal and a network side device consistent on how to transmit joint control information, avoid missed and incorrect detection of the joint control information, and improve communication effectiveness.

Optionally, based on the method 200, the terminal may obtain a configuration of a scheduled object combination, where the configuration of the scheduled object combination does not include a configuration of the target control resource set.

In this embodiment, for example, a configuration of a scheduled cell combination or a configuration of a scheduled cell does not include a configuration of a full search space (full SS) or a configuration of a lite search space (lite SS). For example, the configuration does not include at least one of the following: a search space identity (SS ID), a quantity of physical downlink control channel (Physical Downlink Control Channel, PDCCH) candidates, a quantity of control channel elements (Control Channel Elements, CCEs), and an aggregation level. The configuration of the lite search space is relative to the configuration of the full search space (full SS).

In this embodiment, a configuration of a scheduling cell may provide information about a scheduled cell that is jointly scheduled. Therefore, the joint scheduling relationship may be considered as a part of the scheduling cell. Therefore, the configuration of the scheduled cell combination or the configuration of the scheduled cell does not carry the configuration of the target control resource set, for example, does not carry a related configuration of a joint search space (joint SS).

Optionally, based on the method 200, the target control resource set meets at least one of the following (1) to (3):
(1) A configuration of the scheduling object includes a configuration of the target control resource set.
   In this embodiment, for example, a configuration of a search space in a configuration of a scheduling cell is full. That is, the configuration of the scheduling cell includes a configuration of a full search space (full SS).
(2) A configuration of the scheduled object combination includes at least part of configuration of the target control resource set.
   In this embodiment, for example, a configuration of a search space in a configuration of a scheduled cell combination is not full. That is, the configuration of the scheduled cell combination includes a configuration of a lite search space (lite SS). Specifically, for example, the configuration of the scheduled cell combination includes some parameters of the search space, for example, including only at least one of the following: an SS ID, a quantity of physical downlink control channel candidates (PDCCH candidates), a quantity of CCEs, and an aggregation level.
(3) A configuration of at least one scheduled object in the scheduled object combination includes at least part of configuration of the target control resource set.

In this embodiment, for example, a configuration of a search space in a configuration of a scheduled cell is not full. That is, the configuration of the scheduled cell includes a configuration of a lite search space (lite SS). Specifically, for example, the configuration of the scheduled cell includes some parameters of the search space, for example, including only a quantity of PDCCH candidates, an aggregation level, and the like.

In the foregoing embodiments (1) to (3), a scheduled cell may provide information about a scheduling cell. Therefore, the joint scheduling relationship may be considered as a part of the scheduled cell. Therefore, a configuration of the scheduled cell may carry a part of a related configuration of a search space.

Optionally, the target control resource set mentioned in the embodiments of this application is associated with at least one of the following or the target control resource set corresponds to at least one of the following:
(1) one or more scheduled object combinations;
(2) the one or more scheduled objects, where the scheduled objects may be a scheduled object in the scheduled object combination;
(3) one or more scheduling objects; and
(4) a combination of one or more scheduling objects and the scheduled object combination.

In a first example, there is a correspondence or an association relationship between a target control resource set and one or more scheduling cells. That is, a scheduling cell may be used to schedule, by using the target control resource set, any scheduled cell combination that may be scheduled by the scheduling cell. For example, a terminal may obtain, based on a configuration, that a cell 1 may jointly schedule a cell 2 and a cell 3, or may jointly schedule a cell 4 and a cell 5. By using a target control resource set, the cell 1 may schedule the cell 2 and the cell 3 or may schedule the cell 4 and the cell 5. In this case, it may also be referred to as a correspondence or an association relationship between the target control resource set and any scheduled cell combination.

In a second example, there is a correspondence or an association relationship between a target control resource set and a combination of one or more scheduling cells and a scheduled cell combination. That is, a scheduling cell may be used to schedule, by using different target control resource sets, different scheduled cell combinations that may be scheduled by the scheduling cell. For example, a terminal may obtain, based on a configuration, that a cell 1 may jointly schedule a cell 2 and a cell 3, or may jointly schedule a cell 4 and a cell 5. The cell 1 schedules the cell 2 and the cell 3 by using a target control resource set #1, and schedules the cell 4 and the cell 5 by using a target control resource set #2.

Further, in this case, when a scheduling cell corresponding to the scheduled cell combination is unique, it may also be interpreted that there is a correspondence or an association relationship between the target control resource set and the scheduled cell combination. For example, there is a correspondence between an identity of a target control resource set and a scheduled cell combination, so that all search spaces corresponding to the identity may be used to schedule the scheduled cell combination.

In a third example, there is a correspondence or an association relationship between a target control resource set and one or more scheduled cell combinations. For example, there is a correspondence between an identity of a target control resource set and a scheduled cell combination, so that all search spaces corresponding to the identity may be used to schedule the scheduled cell combination. In this case, it may also be interpreted that there is a correspondence or an association relationship between the target control resource set and a scheduling cell scheduling the scheduled cell combination.

Optionally, the target control resource set mentioned in the embodiments of this application meets at least one of the following conditions:
(1) A configuration of an associated scheduling object includes a first configuration of the target control resource set. The first configuration may be referred to as a full configuration, and corresponds to the configuration of the full search space (full SS) in the foregoing embodiment.
   In this embodiment, a scheduling object associated with the target control resource set may be a scheduling object corresponding to the scheduled object combination or the scheduled object in the first example to the third example above.
(2) A configuration of an associated scheduled object combination or a configuration of at least one scheduled object includes a first configuration or a second configuration of the target control resource set. The second configuration may be referred to as a part of configuration, and corresponds to the configuration of the lite search space (lite SS) in the foregoing embodiment.

In this embodiment, a scheduled object combination or a scheduled object associated with the target control resource set may be a scheduled object combination or a scheduled object corresponding to the scheduling object in the first example to the third example above.

In this embodiment, for example, a configuration of a scheduled cell combination includes a lite (lite) configuration corresponding to an identity (Identity, ID) of the target control resource set.

In this embodiment, for another example, a configuration of at least one cell in a scheduled cell combination includes a lite (lite) configuration corresponding to an ID of the target control resource set.

In a specific example, the target control resource set meets both the foregoing conditions (1) and (2).

(3) On the target control resource set, a terminal needs to monitor a scheduled object combination, or a terminal needs to monitor at least one scheduled object, or a terminal needs to monitor or receive control information or joint control information for a scheduled object combination or at least one scheduled object.

In this embodiment, monitoring the scheduled object combination by the terminal may be monitoring control information about the scheduled object combination. In this example, monitoring the scheduled object by the terminal may be monitoring control information about the scheduled object.

In this embodiment, for example, configuration information about a target control resource set indicates that a terminal needs to monitor joint control information for a scheduled object combination on the target control resource set.

(4) A joint scheduling function is enabled for the target control resource set or the target control resource set can be used for joint scheduling.

In this embodiment, for example, a network side device configures, indicates, or specifies in a protocol that the target control resource set may be used for joint scheduling.

In this embodiment, the target control resource set may be configured with a joint scheduling function or enabled with a joint scheduling function. For example, configuration information about a target control resource set indicates that the target control resource set may be used for joint scheduling. Joint scheduling may refer to scheduling a plurality of scheduled objects by using one piece of control information.

(5) A scheduling object is associated with the target control resource set.

In this embodiment, for example, configuration information about the target control resource set includes, indicates, corresponds to, or associates with the scheduling object.

(6) A scheduled object combination is associated with the target control resource set.

In this embodiment, for example, configuration information about the target control resource set includes, indicates, corresponds to, or associates with the scheduled object combination.

(7) At least one of the scheduled objects is associated with the target control resource set, where the scheduled objects may be a scheduled object in the scheduled object combination.

In this embodiment, for example, configuration information about the target control resource set includes, indicates, corresponds to, or associates with the scheduled objects.

(8) A combination of the scheduling object and the scheduled object combination is associated with the target control resource set.

In this embodiment, for example, configuration information about the target control resource set includes, indicates, corresponds to, or associates with a combination of the scheduling object and the scheduled object combination.

Optionally, that the scheduled object combination is associated in (6) and/or that at least one of the scheduled objects is associated in (7) include/includes one of the following:
(1) First carrier indicator information and second carrier indicator information are the same.
(2) First carrier indicator information and second carrier indicator information partially overlap.
(3) First carrier indicator information includes second carrier indicator information.
(4) Second carrier indicator information includes first carrier indicator information.

The first carrier indicator information is carrier indicator information associated with the target control resource set, and the second carrier indicator information is carrier indicator information associated with the scheduled object combination; or the second carrier indicator information is carrier indicator information associated with the at least one of the scheduled objects.

The carrier indicator information mentioned in this embodiment may be a carrier indicator field (Carrier Indicator Field, CIF), or a carrier indicator in a scheduling cell field (cif-InSchedulingCell).

Optionally, the target control resource set mentioned in the embodiments of this application meets at least one of the following:
(1) One scheduling object is associated and only associated with one target control resource set. That is, the scheduling object only has one target control resource set that may be used to transmit joint control information.
(2) One scheduled object combination is associated and only associated with one target control resource set. That is, only one target control resource set may be used to transmit joint control information for scheduling the scheduled object combination.
(3) A combination of one scheduling object and the scheduled object combination is associated and only associated with one target control resource set. That is, the scheduling object only has one target control resource set that may be used to transmit joint control information for scheduling the scheduled object combination.

Optionally, the target control resource set mentioned in the embodiments of this application may further meet at least one of the following (1) to (6):
(1) One scheduling object is associated with a plurality of target control resource sets.
(2) One scheduled object combination is associated with a plurality of target control resource sets.
(3) A combination of one scheduling object and the scheduled object combination is associated with a plurality of target control resources.
(4) The scheduled object combinations associated with a plurality of target control resource sets are the same. The plurality of target control resource sets mentioned herein may be at least one of the plurality of target control resource sets mentioned in (1) to (3) above.
   For example, a network side device assures, a transmit end assures, a transmit end assumes, or a receive end assumes that a plurality of target control resource sets correspond to a same scheduled object combination. Specifically, for example, joint control information on a plurality of target control resource sets is used to schedule a same scheduled object combination.
(5) The scheduled object combinations associated with at least two of a plurality of target control resource sets are at least partially different. The plurality of target control resource sets mentioned herein may be the plurality of target control resource sets mentioned in (1) above.

In this example, different scheduled object combinations indicate that at least some of scheduled objects included in the scheduled object combinations are different. For example, a scheduled object combination 1 includes a cell 1 and a cell 2, and a scheduled object combination 2 includes the cell 2 and a cell 3.

In this embodiment, for example, joint control information on a target control resource set A is used to schedule a scheduled object combination 1, and joint control information on a target control resource set B is used to schedule a scheduled object combination 2.

(6) At least some of the scheduled objects that are in the scheduled object combination and that are associated with at least two of a plurality of target control resource sets are different. The plurality of target control resource sets mentioned herein may be the plurality of target control resource sets mentioned in (1) above.

Optionally, based on the foregoing embodiments, the method further includes: The terminal determines association information between the target control resource set and the scheduled object combination, where the association information is used to determine the scheduled object combination that can be scheduled by the joint control information.

In this embodiment, for example, a transmit end and/or a receive end obtain/obtains association information between a target control resource set and a scheduled object combination, and determine a scheduled object combination that can be scheduled by using joint control information in the target control resource set.

Optionally, the target control resource set mentioned in the embodiments of this application is associated and only associated with the joint control information; or the target control resource set is only used to send and/or receive the joint control information.

In this embodiment, for example, a transmit end and/or a receive end consider/considers that the target control resource set is only used to transmit joint control information.

In this embodiment, for example, a receive end monitors, blindly detects, or receives joint control information only in a target control resource set.

In the embodiments of this application, the terminal may determine the scheduling object and the one or more scheduled object combinations associated with the scheduling obj ect; and determine the target control resource set associated with the scheduled object combination. To be specific, before S202, the method may further include the following steps: The terminal determines the scheduling object and the one or more scheduled object combinations, where the scheduling object is associated with the one or more scheduled object combinations. For a specific determining method, refer to Embodiment 5 to Embodiment 8 below.

Alternatively, the terminal may determine the target control resource set on the scheduling object; and determine the one or more scheduled object combinations associated with the target scheduling object. To be specific, after S202 and before S204, the method may further include the following steps: The terminal determines the scheduling object and the one or more scheduled object combinations, where the scheduling object is associated with the one or more scheduled object combinations. For a specific determining method, refer to Embodiment 5 to Embodiment 8 below.

To describe in detail the joint scheduling method provided in the embodiments of this application, the following provides description with reference to several specific embodiments.

### Embodiment 1

In this embodiment, a terminal may determine a target SS by using an SS ID and a full+lite configuration.

In this embodiment, a scheduling cell CellO may jointly schedule a cell1 and a cell2, and a configuration of the CellO includes a full configuration of a search space 3 (SS3), and configurations of the scheduled cells cell1 and cell2 include a lite configuration of the SS3, so that the cell0 may jointly schedule the cell1 and the cell2 by using the SS3.

### Embodiment 2

In this embodiment, a terminal may determine a target SS by using information that is about a scheduled cell and that is included in an SS configuration.

In this embodiment, a scheduling cell CellO may jointly schedule a cell1 and a cell2, and a configuration of the CellO includes a full configuration of a search space 3 (SS3), and the SS3 is associated with the cell1 and the cell2, so that the cell0 may jointly schedule the cell1 and the cell2 by using the SS3. Specifically, for example, an SS3 configuration carries identities of the cell1 and the cell2, so that the terminal determines that the cell0 may jointly schedule the cell1 and the cell2 by using the SS3.

### Embodiment 3

In this embodiment, a terminal may determine a target SS by using a CIF corresponding to an SS and a CIF of a scheduled cell or a scheduled cell combination.

In this embodiment, for example, a scheduling cell Cell4 may jointly schedule a cell1 and a cell2, and a configuration of the Cell4 includes a configuration of a search space 3 (SS3).

Further, a CIF corresponding to the SS3 is the same as a CIF corresponding to the cell1/cell2. Specifically, for example, the CIF associated with the SS3 is 4, and the CIF of the cell1 and the cell2 is 4. In this case, the Cell4 may jointly schedule the cell1 and the cell2 by using the SS3.

In this embodiment, for another example, a scheduling cell Cell4 may jointly schedule a cell 1 and a cell2, and a configuration of the Cell4 includes a configuration of a search space 3 (SS3). A scheduling cell Cell7 may jointly schedule a cell7 and a cell8, and a configuration of the Cell7 includes the configuration of the search space 3 (SS3).

Further, CIFs corresponding to the SS3 include a CIF corresponding to the cell1 and the cell2. Specifically, for example, the CIFs associated with the SS3 are 4 and 7, and the CIF of the cell1 and the cell2 is 4. In this case, the Cell4 may jointly schedule the cell1 and the cell2 by using the SS3.

### Embodiment 4

In this embodiment, an SS configuration directly or indirectly indicates that a terminal needs to monitor a cell combination, or indicates that an SS is used for joint scheduling.

In this embodiment, for example, a scheduling cell CellO may jointly schedule a cell1 and a cell2, and a configuration of the CellO includes a full configuration of a search space 3 (SS3), and an SS3 configuration indicates that a cell combination to be jointly scheduled needs to be monitored. In this case, the cell0 may jointly schedule the cell1 and the cell2 by using the SS3.

In this embodiment, for example, a scheduling cell CellO may jointly schedule a cell1 and a cell2, and a configuration of the CellO includes a full configuration of a search space 3 (SS3), and an SS3 configuration includes a related parameter of joint control information. In this case, the cell0 may jointly schedule the cell1 and the cell2 by using the SS3.

In this embodiment, for example, a scheduling cell CellO may jointly schedule a cell1 and a cell2, and a configuration of the CellO includes a full configuration of a search space 3 (SS3), and an SS3 configuration indicates that the SS3 configuration may be used for joint scheduling, for example, indicating that a joint scheduling function is enabled. In this case, the cell0 may jointly schedule the cell1 and the cell2 by using the SS3.

### Embodiment 5

In this embodiment, for example, a configuration of a cell0 includes two scheduled object combinations. A combination 1 includes a cell A and a cell B, and a combination 2 includes the cell B and a cell C. In this case, a terminal determines that joint control information about the cell0 may be used to schedule the cells A and B at the same time, or schedule the cells B and C at the same time.

### Embodiment 6

In this embodiment, for example, configurations of a cell A, a cell B, and a cell C include IDs of scheduling cells, and the IDs are all 0. In this case, it is determined that the three cells may be scheduled by using joint control information about a cell0.

### Embodiment 7

In this embodiment, for example, configurations of a cell A, a cell B, and a cell C include IDs of scheduling cells, and the IDs are all 0. In this case, it is determined that the three cells may be scheduled by using joint control information about a cell0.

A configuration of the cell0 includes two scheduled object combinations. A combination 1 includes the cells A and B, and a combination 2 includes the cells B and C. In this case, a terminal determines that the joint control information about the cell0 may be used to schedule the cells A and B at the same time, or schedule the cells B and C at the same time.

### Embodiment 8

In this embodiment, for example, configurations of scheduled objects A and B indicate a scheduling object thereof is a cell2, and CIFs of the scheduled objects A and B are the same. In this case, a terminal determines that joint control information about the cell2 may be used to schedule the cells A and B at the same time.

Further, when the scheduled objects A and B indicate that the scheduling object thereof is the cell2, and the CIFs of the scheduled objects A and B indicate the cell2, the terminal determines that the joint control information about the cell2 may be used to schedule the cells A and B at the same time.

The joint scheduling method according to the embodiments of this application is described in detail above with reference to FIG. 2. A joint scheduling method according to another embodiment of this application is described in detail below with reference to FIG. 3. It can be understood that an interaction between a network side device and a terminal described from the perspective of the network side device is the same as that described on the terminal side in the method shown in FIG. 2. To avoid repetition, related descriptions are appropriately omitted.

FIG. 3 is a schematic flowchart of implementing a joint scheduling method according to an embodiment of this application. The method may be applied to a network side device. As shown in FIG. 3, the method 300 includes the following step.

S302: The network side device configures a target control resource set for a terminal, where the target control resource set is used by a scheduling object to send joint control information, the joint control information is used to schedule a scheduled object combination, and the scheduled object combination includes one or more scheduled objects.

The "configuring" mentioned in the embodiments of this application may be understood as a broad concept, and may be interpreted as configuring an information configuration, for example, an RRC configuration; or may be interpreted as indicating an information indicator, for example, a DCI indicator.

According to the joint scheduling method provided in this embodiment of this application, a network side device configures a target control resource set for a terminal, where the target control resource set is used by a scheduling object to send joint control information, the joint control information is used to schedule a scheduled object combination, and the scheduled object combination includes one or more scheduled objects. This embodiment of this application helps to keep behavior of a terminal and a network side device consistent on how to transmit joint control information, avoid missed and incorrect detection of the joint control information, and improve communication effectiveness.

Optionally, in an embodiment, a configuration of the scheduled object combination does not include a configuration of the target control resource set.

Optionally, in an embodiment, the target control resource set meets at least one of the following: (1) A configuration of the scheduling object includes a configuration of the target control resource set; (2) a configuration of the scheduled object combination includes at least part of configuration of the target control resource set; and (3) a configuration of at least one scheduled object in the scheduled object combination includes at least part of configuration of the target control resource set.

Optionally, in an embodiment, the target control resource set is associated with at least one of the following: (1) one or more scheduled object combinations; (2) the one or more scheduled objects; (3) one or more scheduling objects; and (4) a combination of one or more scheduling objects and the scheduled object combination.

Optionally, in an embodiment, the target control resource set meets at least one of the following (1) to (8):
(1) A configuration of an associated scheduling object includes a first configuration of the target control resource set.
(2) A configuration of an associated scheduled object combination or a configuration of at least one scheduled object includes a first configuration or a second configuration of the target control resource set.
(3) On the target control resource set, a terminal needs to monitor a scheduled object combination, or a terminal needs to monitor at least one scheduled object, or a terminal needs to monitor or receive control information or joint control information for a scheduled object combination or at least one scheduled object.
(4) A joint scheduling function is enabled for the target control resource set or the target control resource set can be used for joint scheduling.
(5) A scheduling object is associated with the target control resource set.
(6) A scheduled object combination is associated with the target control resource set.
(7) At least one of the scheduled objects is associated with the target control resource set.
(8) A combination of the scheduling object and the scheduled object combination is associated with the target control resource set.

Optionally, in an embodiment, that the scheduled object combination is associated and/or that at least one of the scheduled objects is associated include/includes one of the following: (1) First carrier indicator information and second carrier indicator information are the same; (2) first carrier indicator information and second carrier indicator information partially overlap; (3) first carrier indicator information includes second carrier indicator information; and (4) Second carrier indicator information includes first carrier indicator information. The first carrier indicator information is carrier indicator information associated with the target control resource set, and the second carrier indicator information is carrier indicator information associated with the scheduled object combination; or the second carrier indicator information is carrier indicator information associated with the at least one of the scheduled objects.

Optionally, in an embodiment, the target control resource set meets at least one of the following: (1) One scheduling object is associated and only associated with one target control resource set; (2) one scheduled object combination is associated and only associated with one target control resource set; and (3) a combination of one scheduling object and the scheduled object combination is associated and only associated with one target control resource set.

Optionally, in an embodiment, the target control resource set meets at least one of the following: (1) One scheduling object is associated with a plurality of target control resource sets; (2) one scheduled object combination is associated with a plurality of target control resource sets; (3) a combination of one scheduling object and the scheduled object combination is associated with a plurality of target control resources; (4) the scheduled object combinations associated with a plurality of target control resource sets are the same; (5) the scheduled object combinations associated with at least two of a plurality of target control resource sets are at least partially different; and (6) at least some of the scheduled objects that are in the scheduled object combination and that are associated with at least two of a plurality of target control resource sets are different.

Optionally, in an embodiment, the method further includes: The network side device determines association information between the target control resource set and the scheduled object combination, where the association information is used to determine the scheduled object combination that can be scheduled by the joint control information.

Optionally, in an embodiment, the target control resource set is associated and only associated with the joint control information; or the target control resource set is only used to send and/or receive the joint control information.

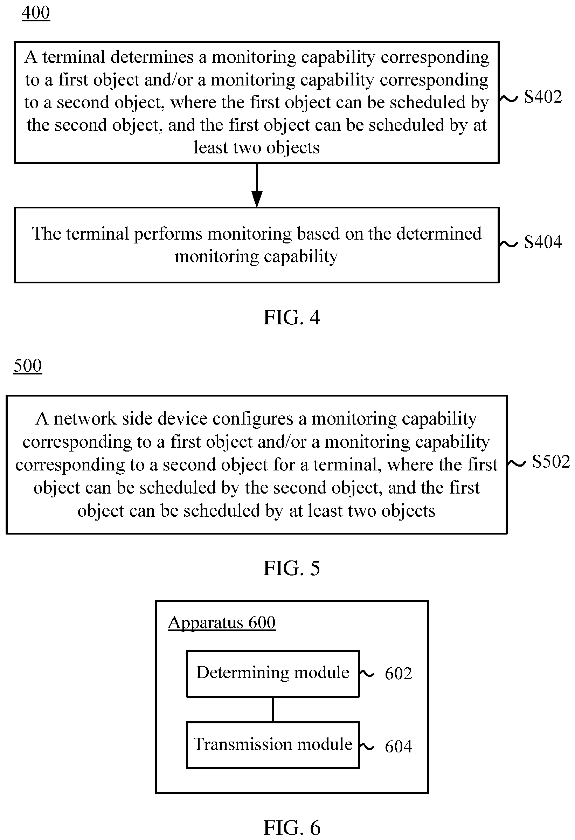

An embodiment of this application further provides a scheduling method. As shown in FIG. 4, the method 400 includes the following steps.

S402: A terminal determines a monitoring capability corresponding to a first object and/or a monitoring capability corresponding to a second object, where the first object can be scheduled by the second object, and the first object can be scheduled by at least two objects.

S404: The terminal performs monitoring based on the determined monitoring capability.

According to the joint scheduling method provided in this embodiment of this application, a plurality of objects can schedule the first object at the same time, the plurality of objects include the second object, and the terminal determines the monitoring capability corresponding to the first object and/or the monitoring capability corresponding to the second object. This helps to keep consistent understanding on the monitoring capability by the terminal and the network side device, avoid missed and incorrect detection of control information, and improve communication effectiveness.

Optionally, in an embodiment, the monitoring capability meets at least one of the following: (1) The monitoring capability corresponding to the first object is the same as the monitoring capability corresponding to the second object; (2) a first monitoring capability corresponding to the second object is the same as a second monitoring capability corresponding to the second object; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) Both the monitoring capability corresponding to the first object and the monitoring capability corresponding to the second object are a first capability; (2) both a first monitoring capability corresponding to the second object and a second monitoring capability corresponding to the second object are a first capability; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) The monitoring capability corresponding to the first object is a first capability; (2) the monitoring capability corresponding to the second object is a first capability; and (3) in a case that the monitoring capability corresponding to the first object and/or the monitoring capability corresponding to the second object are/is a first capability, the second object schedules the first object.

Optionally, in an embodiment, in a case that the monitoring capability corresponding to the first object and/or the monitoring capability corresponding to the second object are/is a second capability, the second object does not schedule the first object.

An application scenario of the foregoing embodiment may be as follows: One object may be scheduled by two or more scheduling objects. For example, a primary cell (Pcell or PScell) may be scheduled by the primary cell, or may be scheduled by another secondary cell (Scell).

In this embodiment, a base station configures or a terminal determines a monitoring capability corresponding to a first cell and/or a monitoring capability corresponding to a second cell, where monitoring may also be referred to as blind detection, and the capability may be replaced with a budget. The terminal may further monitor a PDCCH candidate and/or a CCE based on the monitoring capability, where the monitoring capability meets at least one of the following cases 1 to 5:

### Case 1 (see Embodiments 1, 2, and 3 below)

(1) Optionally, the base station assures or configures or the terminal assumes or considers that the monitoring capability corresponding to the first cell is the same as the monitoring capability corresponding to the second cell.
   Optionally, that the monitoring capability corresponding to the first cell is the same as the monitoring capability corresponding to the second cell may be further refined to at least one of the following: (a) The monitoring capability corresponding to the first cell, a first monitoring capability corresponding to the second cell, and a second monitoring capability corresponding to the second cell are all the same; and (b) the monitoring capability corresponding to the first cell is the same as a first monitoring capability corresponding to the second cell.
(2) Optionally, the base station assures or configures or the terminal assumes or considers that a first monitoring capability corresponding to the second cell is the same as a second monitoring capability corresponding to the second cell.
(3) Optionally, that the monitoring capability is the same may be as follows: The capability is r15monitoringcapability.
(4) Optionally, a monitoring unit is slot, so that the monitoring capability defines a capability of performing monitoring per slot (per slot).

### Case 2 (negative description of Case 1)

(1) The base station avoids or the terminal does not expect that the monitoring capability corresponding to the first cell is different from the monitoring capability corresponding to the second cell.

Optionally, that the monitoring capability corresponding to the first cell is different from the monitoring capability corresponding to the second cell may be further refined to at least one of the following: (a) At least two of the monitoring capability corresponding to the first cell, a first monitoring capability corresponding to the second cell, and a second monitoring capability corresponding to the second cell are different; and (b) the monitoring capability corresponding to the first cell is different from a first monitoring capability corresponding to the second cell.

Optionally, the monitoring capability is r15monitoringcapability.

(2) The base station avoids or the terminal does not expect that a first monitoring capability corresponding to the second cell is different from a second monitoring capability corresponding to the second cell.

### Case 3

(1) Optionally, the base station assures or configures or the terminal assumes or considers that the monitoring capability corresponding to the first cell and the monitoring capability corresponding to the second cell are a first capability.
   Optionally, that the monitoring capability corresponding to the first cell and the monitoring capability corresponding to the second cell are a first capability may be further refined to at least one of the following: (a) The monitoring capability corresponding to the first cell, a first monitoring capability corresponding to the second cell, and a second monitoring capability corresponding to the second cell are a first capability; and (b) the monitoring capability corresponding to the first cell and a first monitoring capability corresponding to the second cell are a first capability.
(2) Optionally, the base station assures or configures or the terminal assumes or considers that a first monitoring capability corresponding to the second cell and a second monitoring capability corresponding to the second cell are a first capability.
(3) Optionally, the first capability is r15monitoringcapability.
(4) Optionally, a monitoring unit is slot, so that the monitoring capability defines a capability of performing monitoring per slot.

### Case 4

(1) Optionally, the base station avoids or the terminal does not expect that the monitoring capability corresponding to the first cell and/or the monitoring capability corresponding to the second cell are/is a second capability.
   Optionally, that the monitoring capability corresponding to the first cell and/or the monitoring capability corresponding to the second cell are/is a second capability may be further refined to at least one of the following: (a) At least one of the monitoring capability corresponding to the first cell, a first monitoring capability corresponding to the second cell, and a second monitoring capability corresponding to the second cell is a second capability; and (b) at least one of the monitoring capability corresponding to the first cell and a first monitoring capability corresponding to the second cell is a second capability.
(2) Optionally, the base station avoids or the terminal does not expect that a first monitoring capability corresponding to the second cell and/or a second monitoring capability corresponding to the second cell are/is a second capability.
(3) Optionally, the second capability is r16monitoringcapability.
(4) Optionally, a monitoring unit is slot, so that the monitoring capability defines a capability of performing monitoring per slot.

### Case 5 (see Embodiment 4 below)

(1) The first cell may be scheduled by two or more cells, the second cell is at least some cells of scheduling cells of the first cell, and the monitoring capability corresponding to the first cell and/or the monitoring capability corresponding to the second cell are/is a first capability.
(2) The first cell may be scheduled by a cell, and the monitoring capability corresponding to the second cell is a first capability or a second capability.
(3) When the monitoring capability corresponding to the first cell and/or the monitoring capability corresponding to the second cell are/is a second capability, the second cell is not enabled or not configured to schedule the first cell.
(4) When the monitoring capability corresponding to the first cell and/or the monitoring capability corresponding to the second cell are/is a first capability, the second cell is enabled or configured to schedule the first cell.

It should be noted that, in the foregoing descriptions of each case, the first monitoring capability corresponding to the second cell is a corresponding monitoring capability when the second cell schedules the first cell; and the second monitoring capability corresponding to the second cell is a corresponding monitoring capability when the second cell performs self-scheduling and/or the second cell schedules another cell (that is, a cell other than the first cell and the second cell).

In a specific example, the first cell is Pcell or PScell. The second cell is one Scell that can schedule the first cell, and may be referred to as a scheduling Scell (sScell).

Detail are described below with reference to several specific embodiments.

Embodiment 1 (corresponding to Case 1): self-scheduling of sScell, and scheduling Pcell by sScell correspond to a same capability. In addition, scheduling Pcell by sScell, and self-scheduling of Pcell correspond to a same capability. For example, both scheduling Pcell by sScell, and scheduling sScell by sScell are a slot-based monitoring capability (slot-based monitoring capability) or r15monitoringcapability.

Embodiment 2 (corresponding to Case 1): Regardless of a capability corresponding to Scell self-scheduling and/or scheduling another Scell by Scell, both self-scheduling of Pcell and self-scheduling of sScell are a slot-based monitoring capability or r15monitoringcapability.

Embodiment 3 (corresponding to Case 1): scheduling Pcell by sScell, and self-scheduling of sScell correspond to a same capability, for example, may be a slot-based monitoring capability (for example, r15monitoringcapability); or may be a span-based monitoring capability (for example, r16monitoringcapability).

Embodiment 4 (corresponding to Case 5): A function/feature of scheduling Pcell by sScell, and a span-based monitoring capability (for example, r16monitoringcapability) cannot be configured or indicated at the same time.

Alternatively, when a function or feature of scheduling Pcell by sScell is enabled or configured, a capability corresponding to sScell and/or Pcell needs to be a slot-based monitoring capability (for example, r15monitoringcapability).

Alternatively, when a capability corresponding to sScell is configured with a span-based monitoring capability (for example, r16monitoringcapability) or a capability corresponding to the sScell is indicated as a span-based monitoring capability (for example, r16monitoringcapability), a function or feature of scheduling Pcell by sScell cannot be configured or enabled.

Alternatively, when a capability corresponding to sScell is configured with a slot-based monitoring capability (for example, r15monitoringcapability) or a capability corresponding to the sScell is indicated as a slot-based monitoring capability (for example, r15monitoringcapability), a function or feature of scheduling Pcell by sScell is configured or enabled.

An embodiment of this application further provides a scheduling method. As shown in FIG. 5, the method 500 includes the following step.

S502: A network side device configures a monitoring capability corresponding to a first object and/or a monitoring capability corresponding to a second object for a terminal, where the first object can be scheduled by the second object, and the first object can be scheduled by at least two objects.

According to the scheduling method provided in this embodiment of this application, a plurality of objects can schedule the first object at the same time, the plurality of objects include the second object, and the network side device configures the monitoring capability corresponding to the first object and/or the monitoring capability corresponding to the second object. This helps to keep consistent understanding on the monitoring capability by the terminal and the network side device, avoid missed and incorrect detection of control information, and improve communication effectiveness.

Optionally, in an embodiment, the monitoring capability meets at least one of the following: (1) The monitoring capability corresponding to the first object is the same as the monitoring capability corresponding to the second object; (2) a first monitoring capability corresponding to the second object is the same as a second monitoring capability corresponding to the second object; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) Both the monitoring capability corresponding to the first object and the monitoring capability corresponding to the second object are a first capability; (2) both a first monitoring capability corresponding to the second object and a second monitoring capability corresponding to the second object are a first capability; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) The monitoring capability corresponding to the first object is a first capability; (2) the monitoring capability corresponding to the second object is a first capability; and (3) in a case that the monitoring capability corresponding to the first object and/or the monitoring capability corresponding to the second object are/is a first capability, the second object schedules the first object.

Optionally, in an embodiment, in a case that the monitoring capability corresponding to the first object and/or the monitoring capability corresponding to the second object are/is a second capability, the second object does not schedule the first object.

For the consideration of enhancing a coverage of a control channel, some cells may be deployed on carriers in a low frequency band. However, the carriers in the low frequency band have insufficient bandwidths and have been heavily deployed to another system or technology (for example, LTE). As a result, downlink signaling overheads of some cells may be high, and a system capacity is affected. To resolve this problem, a wireless communication system may support a cell in being scheduled by a plurality of cells. For example, Pcell or PScell may be scheduled by Scell, so that some PDCCH overheads of Pcell or PScell are transferred to Scell. Such an Scell is referred to as a scheduling Scell (scheduling Scell, sScell). This helps to reduce a congestion level of Pcell or PScell.

Further, to determine which band may support scheduling Pcell or PScell by sScell, which band may be used for Pcell or PScell, and which band may be used for sScell, it is necessary to design how to report a UE capability to clearly indicate this point. If it is not possible to determine which band supports which kind of scheduling, UE needs to implement any possible combination of Pcell or PScell and sScell, which undoubtedly increases a complexity of a UE implementation. Therefore, in this embodiment of this application, the UE capability is clearly defined to limit possible situations that the UE needs to implement, to reduce a complexity of a UE implementation.

An embodiment of this application provides a UE capability reporting method. The method is applied to a terminal side, and includes but is not limited to the following steps.

The terminal sends UE capability information to a network side device, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell.

To be specific, UE may report its capability of supporting scheduling Pcell or PScell by Scell on one or some bands. For UE capabilities of one or some bands (for example, a band combination (band combination, BC), where one BC usually includes two bands, for example, a band A and a band B), it is necessary to clarify which band may deploy Pcell or PScell and which band may deploy sScell when the UE supports scheduling Pcell or PScell by sScell on these bands. The first cell is a primary cell Pcell or a primary secondary cell PScell, and the second cell is a secondary cell that can schedule the first cell, namely, sScell.

Optionally, the UE capability (capability) information is used to determine or indicate on which band the UE supports the first cell, and/or on which band the UE supports the second cell. More specifically, in a case that scheduling Pcell or PScell by Scell is supported, the UE capability information is used to determine or indicate on which band the UE supports Pcell or PScell, and/or on which band the UE supports sScell. For example, the UE capability information may include resource indicator information, where the resource indicator information indicates that the first frequency domain resource supports the first cell, and/or the resource indicator information indicates that the second frequency domain resource supports the second cell.

Optionally, the UE capability information in this embodiment of this application may alternatively be referred to as information about a UE feature (feature) or a UE feature group (feature group).

Optionally, that 'an X^{th} frequency domain resource supports an X^{th} cell' or the 'an X^{th} frequency domain resource supporting an X^{th} cell' mentioned in this embodiment of this application may be understood as that the UE may support the X^{th} frequency domain resource for deploying the X^{th} cell, where X is 1 or 2. The frequency domain resource may be a carrier, a band, a frequency range, and/or the like. For example, that a band A supports a first cell means that the UE may support the band A for deploying the first cell.

Optionally, the first frequency domain resource that supports the first cell: may be understood as a frequency domain resource used for the first cell, and more specifically, may be a frequency domain resource used by the first cell for transmission or used to deploy the first cell; or may be interpreted as a frequency domain resource in which the first cell is located; or may be understood that a capability corresponding to the first frequency domain resource includes a capability that supports the first cell. The second frequency domain resource that supports the second cell: may be understood as a frequency domain resource used for the second cell, and more specifically, may be a frequency domain resource used by the second cell for transmission or used to deploy the second cell; or may be understood as a frequency domain resource in which the second cell is located; or may be understood that a capability corresponding to the second frequency domain resource includes a capability that supports the second cell.

Optionally, after the terminal reports the UE capability information, the method further includes: The terminal receives a scheduling configuration sent by the network side device, where the scheduling configuration meets a limitation of the UE capability information.

Optionally, the resource indicator information includes first resource indicator information and/or second resource indicator information, where the first resource indicator information indicates that the first frequency domain resource supports the first cell, and the second resource indicator information indicates that the second frequency domain resource supports the second cell.

Optionally, the resource indicator information includes one or more bitmaps, and different bits in the bitmaps respectively correspond to the first frequency domain resource and the second frequency domain resource; or different bits in the bitmaps respectively correspond to the first cell and the second cell.

Optionally, the resource indicator information includes first capability information and/or second capability information, where the first capability information indicates that the first frequency domain resource supports the first cell, and the second capability information indicates that the second frequency domain resource supports the second cell.

The foregoing UE capability information clearly indicates a band on which the UE supports deployment of Pcell or PScell, and a band on which the UE supports deployment of sScell.

For example, indicating that a BC (band A, band B) is used for (Pcell or PScell, sScell) and indicating that a BC (band B, band A) is used for (Pcell or PScell, sScell) are two different UE capabilities.

For example, indicating that a BC (band A, band B) is used for (Pcell or PScell, sScell) and indicating that a BC (band A, band B) is used for (sScell, Pcell or PScell) are two different UE capabilities.

For example, after the UE indicates to support a BC or a group of bands (for example, a band A and a band B), the UE capability further provides a combination of Pcell or PScell and sScell supported by the BC or the group of bands, including at least one of the following.

The band A is used for Pcell or PScell, and/or the band B is used for sScell.

The band B is used for Pcell or PScell, and/or the band A is used for sScell.

For example, after the UE indicates to support a BC or a group of bands (for example, a band A and a band B), the UE capability further provides information about two bits. Each bit corresponds to one band in the BC. If the bit is 1, it indicates that the UE supports deployment of Pcell or PScell on the band.

For example, after the UE indicates to support a BC or a group of bands (for example, a band A and a band B), the UE capability further provides indicator information about Pcell or PScell and/or indicator information about Scell. The indicator information about Pcell or PScell indicates that a band is used for Pcell or PScell, and the indicator information about Scell indicates that a band is used for Scell.

Optionally, the UE capability reporting method further includes the following steps:
determining the first frequency domain resource and/or the second frequency domain resource based on at least one of the following:
(1) Determining a frequency domain resource with a low frequency domain position in the frequency domain resources as the first frequency domain resource.
(2) Determining a frequency domain resource with a high frequency domain position in the frequency domain resources as the second frequency domain resource.

The low frequency domain position is interpreted as that a position of one or some frequency domain resources in the frequency domain resources is lower than a position of at least some other frequency domain resources other than the one or some frequency domain resources in the frequency domain resources; the high frequency domain position is interpreted as that a position of one or some frequency domain resources in the frequency domain resources is higher than a position of at least some other frequency domain resources other than the one or some frequency domain resources in the frequency domain resources; and a frequency domain position of the frequency domain resource may be interpreted as a highest or lowest frequency domain position of the frequency domain resource or a center frequency domain position of the frequency domain resource.

For example, the UE capability indicates or defaults to deploy Pcell or PScell on a band with a smaller SCS or on a band whose SCS is less than or equal to a fixed SCS (for example, 15 kHz), and to deploy sScell on a band with a larger SCS. When two bands use a same SCS, it may be considered that Pcell or PScell can be deployed on the two bands.

(3) Determining a frequency domain resource with a small subcarrier spacing (subcarrier spacing, SCS) in the frequency domain resources as the first frequency domain resource.

(4) Determining a frequency domain resource with a large SCS in the frequency domain resources as the second frequency domain resource.

The small SCS is interpreted as that an SCS of one or some frequency domain resources in the frequency domain resources is smaller than an SCS of at least some other frequency domain resources other than the one or some frequency domain resources in the frequency domain resources; the large SCS is interpreted as that an SCS of one or some frequency domain resources in the frequency domain resources is larger than an SCS of at least some other frequency domain resources other than the one or some frequency domain resources in the frequency domain resources; and an SCS of the frequency domain resource may be interpreted as a supported SCS or allowed SCS on the frequency domain resource. Specifically, the SCS may be a maximum SCS, a minimum SCS, or all SCSs in the supported or allowed SCS.

(5) Determining a frequency domain resource that is in the frequency domain resources and whose SCS is less than or equal to a first preset SCS as the first frequency domain resource.

(6) Determining a frequency domain resource that is in the frequency domain resources and whose SCS is greater than or equal to a second preset SCS as the second frequency domain resource.

For example, the UE capability indicates an SCS combination of Pcell or PScell and sScell supported by the UE on a supported BC or group of bands (for example, a band A and a band B). For example, when the UE supports a BC or a group of bands (for example, a band A and a band B) for scheduling Pcell or PScell and sScell, it further indicates (Pcell or PScell SCS, sScell SCS)=(15 kHz, 30 kHz) and (15 kHz, 15 kHz) that are specifically supported. If a base station deploys an SCS combination that does not belong to the foregoing SCS combination of Pcell or PScell and sScell, for example, (15 kHz, 60 kHz), the BC or the group of bands is not used for scheduling Pcell or PScell by Scell; and If a base station deploys an SCS combination that belongs to the foregoing SCS combination of Pcell or PScell and sScell, for example, (15 kHz, 30 kHz), the BC or the group of bands is used for scheduling Pcell or PScell by Scell, a band corresponding to 15 kHz is used for Pcell or PScell, and an SCS of 30 kHz corresponds to sScell.

An SCS of the frequency domain resource may be interpreted as a supported SCS or allowed SCS on the frequency domain resource. Specifically, the SCS may be a maximum SCS, a minimum SCS, or all SCSs in the supported or allowed SCS.

(7) Determining a frequency domain resource with a small associated bandwidth in the frequency domain resources as the first frequency domain resource.

(8) Determining a frequency domain resource with a large associated bandwidth in the frequency domain resources as the second frequency domain resource.

The small associated bandwidth is interpreted as that an associated bandwidth of one or some frequency domain resources in the frequency domain resources is smaller than an associated bandwidth of at least some other frequency domain resources other than the one or some frequency domain resources in the frequency domain resources; the large associated bandwidth is interpreted as that an associated bandwidth of one or some frequency domain resources in the frequency domain resources is larger than an associated bandwidth of at least some other frequency domain resources other than the one or some frequency domain resources in the frequency domain resources; and an associated bandwidth of the frequency domain resource may be a system bandwidth or carrier bandwidth supported on the frequency domain resource, and specifically, may be a maximum bandwidth, a minimum bandwidth, or all bandwidths in the supported system bandwidth or carrier bandwidth.

(9) Determining a frequency domain resource that is in the frequency domain resources and whose associated bandwidth is less than or equal to a first preset bandwidth as the first frequency domain resource.

(10) Determining a frequency domain resource that is in the frequency domain resources and whose associated bandwidth is greater than or equal to a second preset bandwidth as the second frequency domain resource.

An associated bandwidth of the frequency domain resource may be a system bandwidth or carrier bandwidth supported on the frequency domain resource, and specifically, may be a maximum bandwidth, a minimum bandwidth, or all bandwidths in the supported system bandwidth or carrier bandwidth.

For example, the UE capability indicates or defaults to deploy Pcell or PScell on a band with a narrower BW or on a band whose BW is no greater than a fixed BW (for example, 20 MHz), and to deploy sScell on a band with a wider BW or on a band whose BW is no less than a specified BW (for example, 40 MHz, 80 MHz, or 100 MHz).

Optionally, if carriers of two bands are equal or bandwidths of two bands are all less than a fixed BW, it may be considered that the two bands can be used to deploy Pcell or PScell.

For example, the UE supports a BC or a group of bands (for example, a band A and a band B). If a system bandwidth or carrier bandwidth (for example, maximum or minimum) supported on the band A is less than 20 MHz, the band A is used for Pcell or PScell.

For example, the UE supports a BC or a group of bands (for example, a band A and a band B). If a system bandwidth or carrier bandwidth (for example, maximum or minimum) supported on the band B is no less than 40 MHz, the band B is used for sScell.

(11) Determining a frequency domain resource with a small quantity of associated control resources in the frequency domain resources as the first frequency domain resource.

(12) Determining a frequency domain resource with a large quantity of associated control resources in the frequency domain resources as the second frequency domain resource.

The small quantity of associated control resources is interpreted as that a quantity of associated control resources of one or some frequency domain resources in the frequency domain resources is smaller than a quantity of associated control resources of at least some other frequency domain resources other than the one or some frequency domain resources in the frequency domain resources; and the large quantity of associated control resources is interpreted as that a quantity of associated control resources of one or some frequency domain resources in the frequency domain resources is larger than a quantity of associated control resources of at least some other frequency domain resources other than the one or some frequency domain resources in the frequency domain resources.

(13) Determining a frequency domain resource that is in the frequency domain resources and whose quantity of associated control resources is less than or equal to a first preset control resource amount as the first frequency domain resource.

(14) Determining a frequency domain resource that is in the frequency domain resources and whose quantity of associated control resources is greater than or equal to a second preset control resource amount as the second frequency domain resource.

For example, the UE capability indicates or defaults to deploy Pcell or PScell on a band with a small quantity of control resources or a small quantity of PDCCH or CCE BD times, and to deploy sScell on a band with a large quantity of control resources or a large quantity of PDCCH or CCE BD times.

Optionally, if a quantity of control resources of two bands is the same, a party that supports a less SS or CORESET or a party that supports slot-level monitoring may be configured to deploy Pcell or PScell.

For example, the UE supports a BC or a group of bands (for example, a band A and a band B). If a quantity of control resources (for example, a quantity of PDCCHs or CCEs) supported on the band A is less than or equal to a threshold 1, the band A is used for Pcell or PScell.

For example, the UE supports a BC or a group of bands (for example, a band A and a band B). If a quantity of control resources (for example, a quantity of PDCCHs or CCEs) supported on the band B is less than or equal to a threshold 2, the band B is used for sScell.

To be specific, the first frequency domain resource supports the first cell, and/or the second frequency domain resource supports the second cell, and the first frequency domain resource and/or the second frequency domain resource meet/meets at least one of the following:

A frequency domain position of the first frequency domain resource is lower than a frequency domain position of the second frequency domain resource. For example, a frequency domain position (for example, a position of a start point/end point/center/range of the first frequency domain resource) of the first frequency domain resource is lower than a frequency domain position (for example, a position of a start point/end point/center/range of the second frequency domain resource) of the second frequency domain resource.

A subcarrier spacing SCS of the first frequency domain resource is less than or equal to an SCS of the second frequency domain resource. For example, an SCS of the first frequency domain resource is less than an SCS of the second frequency domain resource, or an SCS (for example, a maximum SCS or all SCSs) supported by the UE in the first frequency domain resource is less than an SCS (for example, a minimum SCS or all SCSs) supported by the UE in the second frequency domain resource.

An SCS of the first frequency domain resource is less than or equal to a first preset SCS. For example, an SCS of the first frequency domain resource is the first preset SCS (for example, 15 kHz), or an SCS (for example, a maximum SCS or all SCSs) supported by the UE in the first frequency domain resource is the first preset SCS (for example, 15 kHz).

An SCS of the second frequency domain resource is greater than or equal to a second preset SCS. For example, an SCS of the second frequency domain resource is the second preset SCS (for example, 30 kHz), or an SCS (for example, a minimum SCS or all SCSs) supported by the UE in the second frequency domain resource is the second preset SCS (for example, 30 kHz).

An associated bandwidth of the first frequency domain resource is less than or equal to an associated bandwidth of the second frequency domain resource. For example, a bandwidth (for example, a maximum bandwidth or all bandwidths) supported by the UE in the first frequency domain resource is less than a bandwidth (for example, a minimum bandwidth or all bandwidths) supported by the UE in the second frequency domain resource.

An associated bandwidth of the first frequency domain resource is less than or equal to a first preset bandwidth. For example, a bandwidth (for example, a maximum bandwidth or all bandwidths) supported by the UE in the first frequency domain resource is less than or equal to the first preset bandwidth (for example, 10 MHz).

An associated bandwidth of the second frequency domain resource is greater than or equal to a second preset bandwidth. For example, a bandwidth (for example, a minimum bandwidth or all bandwidths) supported by the UE in the second frequency domain resource is greater than or equal to the second preset bandwidth (for example, 40 MHz).

An associated bandwidth of a frequency domain resource may be a system bandwidth or carrier bandwidth supported on the frequency domain resource, and specifically, may be a maximum bandwidth, a minimum bandwidth, or all bandwidths.

A quantity of associated control resources of the first frequency domain resource is less than or equal to a quantity of associated control resources of the second frequency domain resource. For example, a quantity of associated control resources (for example, a maximum control resource amount or all control resource amounts) of the UE in the first frequency domain resource is less than a quantity of associated control resources (for example, a minimum control resource amount or all control resource amounts) of the UE in the second frequency domain resource.

A quantity of associated control resources of the first frequency domain resource is less than or equal to a first preset control resource amount. For example, a quantity of associated control resources (for example, a maximum control resource amount or all control resource amounts) of the UE in the first frequency domain resource is less than or equal to the first preset control resource amount (for example, eight PDCCH candidates or CCEs).

A quantity of associated control resources of the second frequency domain resource is greater than or equal to a second preset control resource amount. For example, a quantity of associated control resources (for example, a minimum control resource amount or all control resource amounts) of the UE in the second frequency domain resource is greater than or equal to the second preset control resource amount (for example, 32 PDCCH candidates or CCEs).

A quantity of associated control resources of a frequency domain resource may be a quantity of PDCCH candidates, a quantity of CCEs, a quantity of CORESETs, a quantity of search spaces, a quantity of DCI formats, a quantity of specific DCI formats (for example, unicast DCI), a quantity of occupied resources, or a corresponding quantity of blind detection times supported on the frequency domain resource.

Optionally, the first frequency domain resource is a frequency domain resource that is in a plurality of frequency domain resources included in the frequency domain resources and that is sorted at a left position, a front position, or a high position. That is, the first frequency domain resource is a frequency domain resource at a leftmost, most significant, or highest position in the frequency domain resources.

Optionally, the second frequency domain resource is a frequency domain resource that is in a plurality of frequency domain resources included in the frequency domain resources and that is sorted at a right position, a back position, or a low position. That is, the second frequency domain resource is a frequency domain resource at a rightmost, least significant, or lowest position in the frequency domain resources.

Optionally, the second frequency domain resource is a frequency domain resource that is in a plurality of frequency domain resources included in the frequency domain resources and that is sorted at a left position, a front position, or a high position. That is, the second frequency domain resource is a frequency domain resource at a leftmost, most significant, or highest position in the frequency domain resources.

Optionally, the first frequency domain resource is a frequency domain resource that is in a plurality of frequency domain resources included in the frequency domain resources and that is sorted at a right position, a back position, or a low position. That is, the first frequency domain resource is a frequency domain resource at a rightmost, least significant, or lowest position in the frequency domain resources.

For example, for a BC or a group of bands, a band at a front or leftmost position in the BC or the group of bands is used for Pcell or PScell, and/or a band at a back or rightmost position is used for sScell. Alternatively, on the contrary, a band at a front or leftmost position in the BC or ground of bands is used for sScell, and/or a band at a least significant or rightmost position is used for Pcell or PScell.

Optionally, one of the first frequency domain resource and the second frequency domain resource is a frequency domain resource that supports a specific capability or includes a specific capability. And/or, another of the first frequency domain resource and the second frequency domain resource is a frequency domain resource that does not support a specific capability or that does not include a specific capability. Specifically, the first frequency domain resource is a frequency domain resource that supports a specific capability or includes a specific capability, and/or the second frequency domain resource is a frequency domain resource that does not support a specific capability or that does not include a specific capability. Alternatively, the first frequency domain resource is a frequency domain resource that does not support a specific capability or that does not include a specific capability, and/or the second frequency domain resource is a frequency domain resource that supports a specific capability or includes a specific capability.

For example, for a BC or a group of bands, if a band supports a specific capability, the band is used for Pcell or PScell, and/or if a band does not support a specific capability, the band is used for sScell; or vice versa.

For example, the specific capability is crossCarrierScheduling-SameSCS or crossCarrierScheduling-DiffSCS.

Specifically, if a capability corresponding to a band A does not include crossCarrierScheduling-SameSCS and/or a capability corresponding to a band B includes crossCarrierScheduling-SameSCS, the band B may be used for sScell and/or the band A may be used for Pcell or PScell.

Specifically, if a capability corresponding to a band A does not include crossCarrierScheduling-DiffSCS and/or a capability corresponding to a band B includes crossCarrierScheduling-DiffSCS, the band B is used for sScell and/or the band A is used for Pcell or PScell

In this way, in this embodiment of this application, the terminal reports, by using the UE capability information, a type of scheduling supported by a band, so as to limit a possible case, thereby reducing a complexity of a UE implementation.

An embodiment of this application further provides a UE capability reporting method. The method is applied to a network side device, and includes but is not limited to the following steps:

The network side device receives UE capability information from a terminal, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell; and
the network side device provides scheduling configuration for the terminal based on the UE capability information.

Optionally, the UE capability information includes resource indicator information, where the resource indicator information indicates that the first frequency domain resource supports the first cell, and/or the resource indicator information indicates that the second frequency domain resource supports the second cell.

It should be noted that, in this embodiment of this application, the method embodiment of the network side device is implemented corresponding to the embodiment of the terminal side. All implementations of the foregoing embodiments of the terminal side are applicable to the embodiments of the network side device, and a same technical effect can be achieved. Therefore, details are not described herein again.

It should be noted that, the joint scheduling method provided in this embodiment of this application may be performed by a joint scheduling apparatus or a control module that is in the joint scheduling apparatus and that is configured to perform the joint scheduling method. In this embodiment of this application, an example in which the joint scheduling apparatus performs the joint scheduling method is used to describe the joint scheduling apparatus provided in this embodiment of this application.

FIG. 6 is a schematic structural diagram of a joint scheduling apparatus according to an embodiment of this application. The apparatus may correspond to a terminal in another embodiment. As shown in FIG. 6, the apparatus 600 includes the following modules:
a determining module 602, configured to determine a target control resource set; and
a transmission module 604, configured to transmit joint control information based on the target control resource set, where the target control resource set is used by a scheduling object to send joint control information, the joint control information is used to schedule a scheduled object combination, and the scheduled object combination includes one or more scheduled objects.

In this embodiment of this application, the apparatus 600 determines a target control resource set, and transmits joint control information based on the target control resource set, where the target control resource set is used by a scheduling object to send joint control information, the joint control information is used to schedule a scheduled object combination, and the scheduled object combination includes one or more scheduled objects. This embodiment of this application help to keep behavior of a terminal and a network side device consistent on how to transmit joint control information, avoid missed and incorrect detection of the joint control information, and improve communication effectiveness.

Optionally, in an embodiment, a configuration of the scheduled object combination does not include a configuration of the target control resource set.

Optionally, in an embodiment, the target control resource set meets at least one of the following: (1) A configuration of the scheduling object includes a configuration of the target control resource set; (2) a configuration of the scheduled object combination includes at least part of configuration of the target control resource set; and (3) a configuration of at least one scheduled object in the scheduled object combination includes at least part of configuration of the target control resource set.

Optionally, in an embodiment, the target control resource set is associated with at least one of the following: (1) one or more scheduled object combinations; (2) the one or more scheduled objects; (3) one or more scheduling objects; and (4) a combination of one or more scheduling objects and the scheduled object combination.

Optionally, in an embodiment, the target control resource set meets at least one of the following (1) to (8):
(1) A configuration of an associated scheduling object includes a first configuration of the target control resource set.
(2) A configuration of an associated scheduled object combination or a configuration of at least one scheduled object includes a first configuration or a second configuration of the target control resource set.
(3) On the target control resource set, a terminal needs to monitor a scheduled object combination, or a terminal needs to monitor at least one scheduled object, or a terminal needs to monitor or receive control information or joint control information for a scheduled object combination or at least one scheduled object.
(4) A joint scheduling function is enabled for the target control resource set or the target control resource set can be used for joint scheduling.
(5) A scheduling object is associated with the target control resource set.
(6) A scheduled object combination is associated with the target control resource set.
(7) At least one of the scheduled objects is associated with the target control resource set.
(8) A combination of the scheduling object and the scheduled object combination is associated with the target control resource set.

Optionally, in an embodiment, that the scheduled object combination is associated and/or that at least one of the scheduled objects is associated include/includes one of the following: (1) First carrier indicator information and second carrier indicator information are the same; (2) first carrier indicator information and second carrier indicator information partially overlap; (3) first carrier indicator information includes second carrier indicator information; and (4) second carrier indicator information includes first carrier indicator information. The first carrier indicator information is carrier indicator information associated with the target control resource set, and the second carrier indicator information is carrier indicator information associated with the scheduled object combination; or the second carrier indicator information is carrier indicator information associated with the at least one of the scheduled objects.

Optionally, in an embodiment, the target control resource set meets at least one of the following: (1) One scheduling object is associated and only associated with one target control resource set; (2) one scheduled object combination is associated and only associated with one target control resource set; and (3) a combination of one scheduling object and the scheduled object combination is associated and only associated with one target control resource set.

Optionally, in an embodiment, the target control resource set meets at least one of the following: (1) One scheduling object is associated with a plurality of target control resource sets; (2) one scheduled object combination is associated with a plurality of target control resource sets; (3) a combination of one scheduling object and the scheduled object combination is associated with a plurality of target control resources; (4) the scheduled object combinations associated with a plurality of target control resource sets are the same; (5) the scheduled object combinations associated with at least two of a plurality of target control resource sets are at least partially different; and (6) at least some of the scheduled objects that are in the scheduled object combination and that are associated with at least two of a plurality of target control resource sets are different.

Optionally, in an embodiment, the apparatus includes a determining module, configured to determine association information between the target control resource set and the scheduled object combination, where the association information is used to determine the scheduled object combination that can be scheduled by the joint control information.

Optionally, in an embodiment, the target control resource set is associated and only associated with the joint control information; or the target control resource set is only used to send and/or receive the joint control information.

The apparatus 600 according to this embodiment of this application may correspond to the procedures in the method 200 in the embodiments of this application. In addition, the units/modules in the apparatus 600 and the foregoing operations and/or functions are separately for implementing the corresponding procedures in the method 200, and a same or equivalent technical effect can be achieved. For brevity, details are not described herein again.

The joint scheduling apparatus in this embodiment of this application may be an apparatus, an apparatus or electronic device with an operating system, or a component, an integrated circuit, or a chip in a terminal. The apparatus or electronic device may be a mobile terminal, or a non-mobile terminal. For example, the mobile terminal may include but be not limited to the foregoing listed types of the terminal 11. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The joint scheduling apparatus provided in this embodiment of this application can implement the processes implemented in the method embodiments from FIG. 2 to FIG. 5, and a same technical effect can be achieved. To avoid repetition, details are not described herein again.

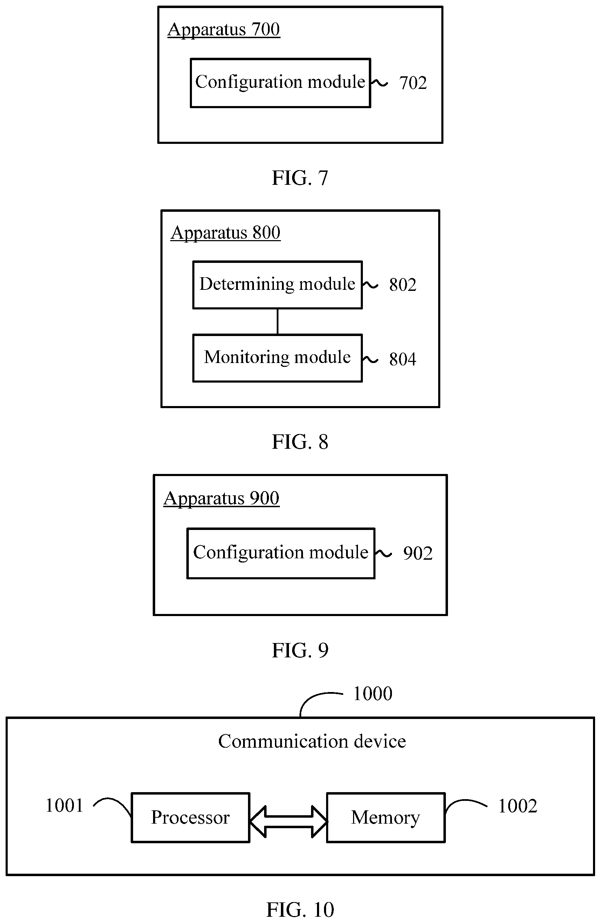

FIG. 7 is a schematic structural diagram of a joint scheduling apparatus according to an embodiment of this application. The apparatus may correspond to a network side device in another embodiment. As shown in FIG. 7, the apparatus 700 includes the following module:
a configuration module 702, used to configure a target control resource set for a terminal.

The target control resource set is used by a scheduling object to send joint control information, the joint control information is used to schedule a scheduled object combination, and the scheduled object combination includes one or more scheduled objects.

According to the joint scheduling apparatus provided in this embodiment of this application, the apparatus 700 configures a target control resource set for a terminal, where the target control resource set is used by a scheduling object to send joint control information, the joint control information is used to schedule a scheduled object combination, and the scheduled object combination includes one or more scheduled objects. This embodiment of this application helps to keep behavior of a terminal and a network side device consistent on how to transmit joint control information, avoid missed and incorrect detection of the joint control information, and improve communication effectiveness.

Optionally, in an embodiment, a configuration of the scheduled object combination does not include a configuration of the target control resource set.

Optionally, in an embodiment, the target control resource set meets at least one of the following: (1) A configuration of the scheduling object includes a configuration of the target control resource set; (2) a configuration of the scheduled object combination includes at least part of configuration of the target control resource set; and (3) a configuration of at least one scheduled object in the scheduled object combination includes at least part of configuration of the target control resource set.

Optionally, in an embodiment, the target control resource set is associated with at least one of the following: (1) one or more scheduled object combinations; (2) the one or more scheduled objects; (3) one or more scheduling objects; and (4) a combination of one or more scheduling objects and the scheduled object combination.

Optionally, in an embodiment, the target control resource set meets at least one of the following (1) to (8):
(1) A configuration of an associated scheduling object includes a first configuration of the target control resource set.
(2) A configuration of an associated scheduled object combination or a configuration of at least one scheduled object includes a first configuration or a second configuration of the target control resource set.
(3) On the target control resource set, a terminal needs to monitor a scheduled object combination, or a terminal needs to monitor at least one scheduled object, or a terminal needs to monitor or receive control information or joint control information for a scheduled object combination or at least one scheduled object.
(4) A joint scheduling function is enabled for the target control resource set or the target control resource set can be used for joint scheduling.
(5) A scheduling object is associated with the target control resource set.
(6) A scheduled object combination is associated with the target control resource set.
(7) At least one of the scheduled objects is associated with the target control resource set.
(8) A combination of the scheduling object and the scheduled object combination is associated with the target control resource set.

Optionally, in an embodiment, that the scheduled object combination is associated and/or that at least one of the scheduled objects is associated include/includes one of the following: (1) First carrier indicator information and second carrier indicator information are the same; (2) first carrier indicator information and second carrier indicator information partially overlap; (3) first carrier indicator information includes second carrier indicator information; and (4) second carrier indicator information includes first carrier indicator information. The first carrier indicator information is carrier indicator information associated with the target control resource set, and the second carrier indicator information is carrier indicator information associated with the scheduled object combination; or the second carrier indicator information is carrier indicator information associated with the at least one of the scheduled objects.

Optionally, in an embodiment, the target control resource set meets at least one of the following: (1) One scheduling object is associated and only associated with one target control resource set; (2) one scheduled object combination is associated and only associated with one target control resource set; and (3) a combination of one scheduling object and the scheduled object combination is associated and only associated with one target control resource set.

Optionally, in an embodiment, the target control resource set meets at least one of the following: (1) One scheduling object is associated with a plurality of target control resource sets; (2) one scheduled object combination is associated with a plurality of target control resource sets; (3) a combination of one scheduling object and the scheduled object combination is associated with a plurality of target control resources; (4) the scheduled object combinations associated with a plurality of target control resource sets are the same; (5) the scheduled object combinations associated with at least two of a plurality of target control resource sets are at least partially different; and (6) at least some of the scheduled objects that are in the scheduled object combination and that are associated with at least two of a plurality of target control resource sets are different.

Optionally, in an embodiment, the apparatus includes a determining module, configured to determine association information between the target control resource set and the scheduled object combination, where the association information is used to determine the scheduled object combination that can be scheduled by the joint control information.

Optionally, in an embodiment, the target control resource set is associated and only associated with the joint control information; or the target control resource set is only used to send and/or receive the joint control information.

The apparatus 700 according to this embodiment of this application may correspond to the procedures in the method 300 in the embodiments of this application. In addition, the units/modules in the apparatus 700 and the foregoing operations and/or functions are separately for implementing the corresponding procedures in the method 300, and a same or equivalent technical effect can be achieved. For brevity, details are not described herein again.

FIG. 8 is a schematic structural diagram of a scheduling apparatus according to an embodiment of this application. The apparatus may correspond to a terminal in another embodiment. As shown in FIG. 8, the apparatus 800 includes the following modules:
a determining module 802, configured to determine a monitoring capability corresponding to a first object and/or a monitoring capability corresponding to a second object, where the first object can be scheduled by the second object, and the first object can be scheduled by at least two objects; and
a monitoring module 804, configured to perform monitoring based on the determined monitoring capability.

According to the scheduling apparatus provided in this embodiment of this application, a plurality of objects can schedule the first object at the same time, the plurality of objects include the second object, and the monitoring capability corresponding to the first object and/or the monitoring capability corresponding to the second object are/is determined. This helps to keep consistent understanding on the monitoring capability by the terminal and the network side device, avoid missed and incorrect detection of control information, and improve communication effectiveness.

Optionally, in an embodiment, the monitoring capability meets at least one of the following: (1) The monitoring capability corresponding to the first object is the same as the monitoring capability corresponding to the second object; (2) a first monitoring capability corresponding to the second object is the same as a second monitoring capability corresponding to the second object; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) Both the monitoring capability corresponding to the first object and the monitoring capability corresponding to the second object are a first capability; (2) both a first monitoring capability corresponding to the second object and a second monitoring capability corresponding to the second object are a first capability; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) The monitoring capability corresponding to the first object is a first capability; (2) the monitoring capability corresponding to the second object is a first capability; and (3) in a case that the monitoring capability corresponding to the first object and/or the monitoring capability corresponding to the second object are/is a first capability, the second object schedules the first object.

Optionally, in an embodiment, in a case that the monitoring capability corresponding to the first object and/or the monitoring capability corresponding to the second object are/is a second capability, the second object does not schedule the first object.

The apparatus 800 according to this embodiment of this application may correspond to the procedures in the method 400 in the embodiments of this application. In addition, the units/modules in the apparatus 800 and the foregoing operations and/or functions are separately for implementing the corresponding procedures in the method 400, and a same or equivalent technical effect can be achieved. For brevity, details are not described herein again.

FIG. 9 is a schematic structural diagram of a scheduling apparatus according to an embodiment of this application. The apparatus may correspond to a network side device in another embodiment. As shown in FIG. 9, the apparatus 900 includes the following module:
a configuration module 902, used to configure a monitoring capability corresponding to a first object and/or a monitoring capability corresponding to a second object for a terminal, where the first object can be scheduled by the second object, and the first object can be scheduled by at least two objects.

According to the scheduling apparatus provided in this embodiment of this application, a plurality of objects can schedule the first object at the same time, the plurality of objects include the second object, and the monitoring capability corresponding to the first object and/or the monitoring capability corresponding to the second object are/is configured. This helps to keep consistent understanding on the monitoring capability by the terminal and the network side device, avoid missed and incorrect detection of control information, and improve communication effectiveness.

Optionally, in an embodiment, the monitoring capability meets at least one of the following: (1) The monitoring capability corresponding to the first object is the same as the monitoring capability corresponding to the second object; (2) a first monitoring capability corresponding to the second object is the same as a second monitoring capability corresponding to the second object; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) Both the monitoring capability corresponding to the first object and the monitoring capability corresponding to the second object are a first capability; (2) both a first monitoring capability corresponding to the second object and a second monitoring capability corresponding to the second object are a first capability; and (3) a unit of the monitoring capability is slot. The first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

Optionally, in an embodiment, the monitoring capability meets at least one of the following: (1) The monitoring capability corresponding to the first object is a first capability; (2) the monitoring capability corresponding to the second object is a first capability; and (3) in a case that the monitoring capability corresponding to the first object and/or the monitoring capability corresponding to the second object are/is a first capability, the second object schedules the first object.

Optionally, in an embodiment, in a case that the monitoring capability corresponding to the first object and/or the monitoring capability corresponding to the second object are/is a second capability, the second object does not schedule the first object.

The apparatus 900 according to this embodiment of this application may correspond to the procedures in the method 500 in the embodiments of this application. In addition, the units/modules in the apparatus 900 and the foregoing operations and/or functions are separately for implementing the corresponding procedures in the method 500, and a same or equivalent technical effect can be achieved. For brevity, details are not described herein again.

An embodiment of this application further provides an apparatus for reporting UE capability information. The apparatus is applied to a terminal, and includes the following module:
a sending module, configured to send the UE capability information to a network side device, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell.

An embodiment of this application further provides an apparatus for reporting UE capability information. The apparatus is applied to a network side device, and includes the following modules:
a receiving module, configured to receive the UE capability information from a terminal side, where the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell; and
a configuration module, configured to provide scheduling configuration for the terminal based on the UE capability information.

It should be noted that the apparatus embodiment corresponds to the foregoing method embodiment. All implementations of the foregoing method embodiment are applicable to the apparatus embodiment, and a same technical effect can be achieved. Therefore, details are not described herein again.

Optionally, as shown in FIG. 10, an embodiment of this application provides a communication device 1000, including a processor 1001, a memory 1002, and a program or an instruction that is stored in the memory 1002 and that can be run on the processor 1001. For example, when the communication device 1000 is a terminal, and when the program or the instruction is executed by the processor 1001, the processes in the foregoing joint scheduling method, scheduling method, or UE capability reporting method embodiments are implemented, and a same technical effect can be achieved. When the communication device 1000 is a network side device, and when the program or the instruction is executed by the processor 1001, the processes in the foregoing joint scheduling method, scheduling method, or UE capability reporting method embodiments are implemented, and a same technical effect can be achieved. To avoid repetition, details are not described herein again.

An embodiment of this application further provides a terminal, including a processor and a communication interface, where the processor is configured to determine a target control resource set, and the communication interface is configured to transmit joint control information based on the target control resource set; and the target control resource set is used by a scheduling object to send joint control information, the joint control information is used to schedule a scheduled object combination, and the scheduled object combination includes one or more scheduled objects. Alternatively, the processor is configured to determine a monitoring capability corresponding to a first object and/or a monitoring capability corresponding to a second object, where the first object can be scheduled by the second object, and the first object can be scheduled by at least two objects; and the communication interface is configured to perform monitoring based on the determined monitoring capability.

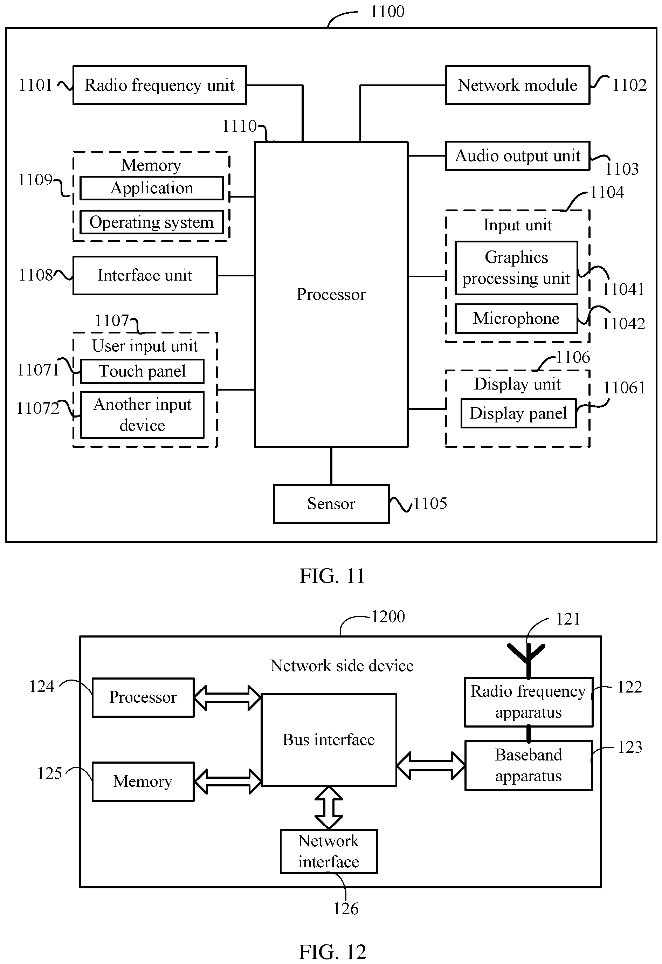

The terminal embodiment corresponds to the foregoing method embodiment on the terminal side. Each implementation process and implementation of the foregoing method embodiment may be applicable to the terminal embodiment, and a same technical effect can be achieved. Specifically, FIG. 11 is a schematic diagram of a hardware structure of a terminal according to an embodiment of this application.

The terminal 1100 includes but is not limited to at least some components in a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (such as a battery) that supplies power to each component. The power supply may be logically connected to the processor 1110 by using a power supply management system, to implement functions such as charging and discharging management, and power consumption management by using the power supply management system. The terminal structure shown in FIG. 11 constitutes no limitation on the terminal, and the terminal may include more or fewer components than those shown in the figure, or combine some components, or have different component arrangements. Details are not described herein.

It should be understood that, in this embodiment of this application, the input unit 1104 may include a graphics processing unit (Graphics Processing Unit, GPU) 11041 and a microphone 11042, and the graphics processing unit 11041 processes image data of a still picture or a video obtained by an image capture apparatus (for example, a camera) in a video capture mode or an image capture mode. The display unit 1106 may include a display panel 11061. The display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include but be not limited to a physical keyboard, a functional button (such as a volume control button or a power on/off button), a trackball, a mouse, and a joystick. Details are not described herein.

In this embodiment of this application, the radio frequency unit 1101 receives downlink data from a network side device and then sends the downlink data to the processor 1110 for processing; and sends uplink data to the network side device. Usually, the radio frequency unit 1101 includes but is not limited to an antenna, at least one amplifier, a transceiver, a coupler, a low noise amplifier, a duplexer, and the like.

The memory 1109 may be configured to store a software program or an instruction and various data. The memory 1109 may mainly include a program or instruction storage area and a data storage area. The program or instruction storage area may store an operating system, an application or an instruction required by at least one function (for example, a sound playing function or an image playing function), and the like. In addition, the memory 1109 may include a high-speed random access memory, and may further include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transient solid-state storage device.

The processor 1110 may include one or more processing units. Optionally, an application processor and a modem processor may be integrated into the processor 1110. The application processor mainly processes an operating system, a user interface, an application, an instruction, or the like. The modem processor mainly processes wireless communication, for example, a baseband processor. It may be understood that, alternatively, the modem processor may not be integrated into the processor 1110.

The processor 1110 is configured to determine a target control resource set, and the radio frequency unit 1101 is configured to transmit joint control information based on the target control resource set, where the target control resource set is used by a scheduling object to send joint control information, the joint control information is used to schedule a scheduled object combination, and the scheduled object combination includes one or more scheduled objects. Alternatively, the processor 1110 is configured to determine a monitoring capability corresponding to a first object and/or a monitoring capability corresponding to a second object, where the first object can be scheduled by the second object, and the first object can be scheduled by at least two objects; and the radio frequency unit 1101 is configured to perform monitoring based on the determined monitoring capability.

In this embodiment of this application, a terminal determines a target control resource set, and transmits joint control information based on the target control resource set, where the target control resource set is used by a scheduling object to send joint control information, the joint control information is used to schedule a scheduled object combination, and the scheduled object combination includes one or more scheduled objects. This embodiment of this application helps to keep behavior of a terminal and a network side device consistent on how to transmit joint control information, avoid missed and incorrect detection of the joint control information, and improve communication effectiveness.

In this embodiment of this application, a plurality of objects can schedule the first object at the same time, the plurality of objects include the second object, and the terminal determines the monitoring capability corresponding to the first object and/or the monitoring capability corresponding to the second object. This helps to keep consistent understanding on the monitoring capability by the terminal and the network side device, avoid missed and incorrect detection of control information, and improve communication effectiveness.

The terminal 1100 provided in this embodiment of this application can implement the processes in the foregoing joint scheduling method, scheduling method, or UE capability reporting method embodiments, and a same technical effect can be achieved. To avoid repetition, details are not described herein again.

An embodiment of this application further provides a network side device, including a processor and a communication interface, where the communication interface is used to configure a target control resource set for a terminal, the target control resource set is used by a scheduling object to send joint control information, the joint control information is used to schedule a scheduled object combination, and the scheduled object combination includes one or more scheduled objects. Alternatively, the communication interface is used to configure a monitoring capability corresponding to a first object and/or a monitoring capability corresponding to a second object for a terminal, where the first object can be scheduled by the second object, and the first object can be scheduled by at least two objects.

The network side device embodiment corresponds to the foregoing method embodiment of the network side device. Each implementation process and implementation of the foregoing method embodiments may be applicable to the network side device embodiment, and a same technical effect can be achieved.

Specifically, an embodiment of this application further provides a network side device. As shown in FIG. 12, the network side device 1200 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes information that needs to be sent, and sends processed information to the radio frequency apparatus 122. The radio frequency apparatus 122 processes the received information, and sends processed information by using the antenna 121.

The frequency band processing apparatus may be located in the baseband apparatus 123. The method performed by the network side device in the foregoing embodiment may be implemented in the baseband apparatus 123. The baseband apparatus 123 includes a processor 124 and a memory 125.

The baseband apparatus 123 may include, for example, at least one baseband board, where a plurality of chips are disposed on the baseband board. As shown in FIG. 12, one chip is, for example, the processor 124, which is connected to the memory 125, so as to invoke a program in the memory 125 to perform operations of the network side device shown in the foregoing method embodiments.

The baseband apparatus 123 may further include a network interface 126, configured to exchange information with the radio frequency apparatus 122, where the interface is, for example, a common public radio interface (Common Public Radio Interface, CPRI).

Specifically, the network side device in this embodiment of this application further includes an instruction or a program that is stored in the memory 125 and that can be run on the processor 124. The processor 124 invokes the instruction or the program in the memory 125 to perform the method performed by the modules shown in FIG. 7 or FIG. 9, and a same technical effect is achieved. To avoid repetition, details are not described herein again.

An embodiment of this application further provides a readable storage medium. The readable storage medium stores a program or an instruction, and when the program or the instruction is executed by a processor, the processes in the foregoing joint scheduling method, scheduling method, or UE capability reporting method embodiments are implemented, and a same technical effect can be achieved. To avoid repetition, details are not described herein again.

The processor is the processor in the terminal described in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes in the foregoing joint scheduling method, scheduling method, or UE capability reporting method embodiments, and a same technical effect can be achieved. To avoid repetition, details are not described herein again.

It should be understood that the chip mentioned in this embodiment of this application may also be referred to as a system-level chip, a system chip, a chip system, an on-chip system chip, or the like.

An embodiment of this application further provides a computer program product. The computer program product is stored in a nonvolatile storage medium, and the computer program product is executed by at least one processor to implement the processes in the foregoing joint scheduling method, scheduling method, or UE capability reporting method embodiments, and a same technical effect can be achieved. To avoid repetition, details are not described herein again.

An embodiment of this application further provides a communication device, configured to perform the processes in the foregoing joint scheduling method, scheduling method, or UE capability reporting method embodiments, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network side device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A UE capability reporting method, comprising:
sending, by a terminal, UE capability information to a network side device, wherein the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell.

2. The method according to claim 1, wherein the UE capability information comprises resource indicator information, the resource indicator information indicates the first frequency domain resource, and/or the resource indicator information indicates the second frequency domain resource.

3. The method according to claim 2, wherein the resource indicator information comprises first resource indicator information and/or second resource indicator information, the first resource indicator information indicates the first frequency domain resource, and the second resource indicator information indicates the second frequency domain resource.

4. The method according to claim 2, wherein the resource indicator information comprises one or more bitmaps, and different bits in the bitmaps respectively correspond to the first frequency domain resource and the second frequency domain resource; or different bits in the bitmaps respectively correspond to the first cell and the second cell.

5. The method according to claim 1, wherein the UE capability information comprises first capability information and/or second capability information, the first capability information indicates the first frequency domain resource, and the second capability information indicates the second frequency domain resource.

6. The method according to any one of claims 1 to 5, further comprising:
determining the first frequency domain resource and/or the second frequency domain resource based on at least one of the following:
determining at least part of the frequency domain resources with a low frequency domain position as the first frequency domain resource;
determining at least part of the frequency domain resources with a high frequency domain position as the second frequency domain resource;
determining at least part of the frequency domain resources with a small subcarrier spacing SCS as the first frequency domain resource;
determining at least part of the frequency domain resources with a large SCS as the second frequency domain resource;
determining at least part of the frequency domain resources with an SCS less than or equal to a first preset SCS as the first frequency domain resource;
determining at least part of the frequency domain resources with an SCS greater than or equal to a second preset SCS as the second frequency domain resource;
determining at least part of the frequency domain resources with a small associated bandwidth as the first frequency domain resource;
determining at least part of the frequency domain resources with a large associated bandwidth as the second frequency domain resource;
determining at least part of the frequency domain resources with an associated bandwidth less than or equal to a first preset bandwidth as the first frequency domain resource;
determining at least part of the frequency domain resources with an associated bandwidth greater than or equal to a second preset bandwidth as the second frequency domain resource;
determining at least part of the frequency domain resources with a small quantity of associated control resources as the first frequency domain resource;
determining at least part of the frequency domain resources with a large quantity of associated control resources as the second frequency domain resource;
determining at least part of the frequency domain resources with a quantity of the associated control resources less than or equal to a first preset control resource amount as the first frequency domain resource; and
determining at least part of the frequency domain resources with a quantity of associated control resources greater than or equal to a second preset control resource amount as the second frequency domain resource.

7. The method according to any one of claims 1 to 5, wherein one of the first frequency domain resource and the second frequency domain resource is a frequency domain resource that is in a plurality of frequency domain resources comprised in the frequency domain resources and that is sorted at a left position, a front position, or a high position.

8. The method according to claim 7, wherein another of the first frequency domain resource and the second frequency domain resource is another frequency domain resource that is in the plurality of frequency domain resources comprised in the frequency domain resources and that is sorted at a right position, a back position, or a low position.

9. The method according to any one of claims 1 to 5, wherein one of the first frequency domain resource and the second frequency domain resource is a frequency domain resource that supports a specific capability or comprises a specific capability.

10. The method according to claim 9, wherein another of the first frequency domain resource and the second frequency domain resource is a frequency domain resource that does not support a specific capability or that does not comprise a specific capability.

11. A UE capability reporting method, comprising:
receiving, by a network side device, UE capability information from a terminal, wherein the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell; and
providing, by the network side device, scheduling configuration for the terminal based on the UE capability information.

12. The method according to claim 11, wherein the UE capability information comprises resource indicator information, the resource indicator information indicates that the first frequency domain resource supports the first cell, and/or the resource indicator information indicates that the second frequency domain resource supports the second cell.

13. A joint scheduling method, comprising:
determining, by a terminal, a target control resource set; and
transmitting, by the terminal, joint control information based on the target control resource set, wherein
the target control resource set is used by a scheduling object to send joint control information, the joint control information is used to schedule a scheduled object combination, and the scheduled object combination comprises one or more scheduled objects.

14. The method according to claim 13, wherein the method further comprises:
determining, by the terminal, association information between the target control resource set and the scheduled object combination, wherein the association information is used to determine the scheduled object combination that can be scheduled by the joint control information.

15. A joint scheduling method, comprising:
configuring, by a network side device, a target control resource set for a terminal, wherein
the target control resource set is used by a scheduling object to send joint control information, the joint control information is used to schedule a scheduled object combination, and the scheduled object combination comprises one or more scheduled objects.

16. The method according to claim 15, wherein the method further comprises:
determining, by the network side device, association information between the target control resource set and the scheduled object combination, wherein the association information is used to determine the scheduled object combination that can be scheduled by the joint control information.

17. The method according to any one of claims 13 to 16, wherein
a configuration of the scheduled object combination does not comprise a configuration of the target control resource set.

18. The method according to any one of claims 13 to 16, wherein the target control resource set meets at least one of the following:
a configuration of the scheduling object comprises a configuration of the target control resource set;
a configuration of the scheduled object combination comprises at least part of configuration of the target control resource set; and
a configuration of at least one scheduled object in the scheduled object combination comprises at least part of configuration of the target control resource set.

19. The method according to any one of claims 13 to 16, wherein the target control resource set is associated with at least one of the following:
one or more scheduled object combinations;
the one or more scheduled objects;
one or more scheduling objects; and
a combination of one or more scheduling objects and the scheduled object combination.

20. The method according to any one of claims 13 to 16, wherein the target control resource set meets at least one of the following conditions:
a configuration of an associated scheduling object comprises a first configuration of the target control resource set;
a configuration of an associated scheduled object combination or a configuration of at least one scheduled object comprises a first configuration or a second configuration of the target control resource set;
on the target control resource set, a terminal needs to monitor a scheduled object combination, or a terminal needs to monitor at least one scheduled object, or a terminal needs to monitor or receive control information or joint control information for a scheduled object combination or at least one scheduled object;
a joint scheduling function is enabled for the target control resource set or the target control resource set can be used for joint scheduling;
a scheduling object is associated with the target control resource set;
a scheduled object combination is associated with the target control resource set;
at least one of the scheduled objects is associated with the target control resource set; and
a combination of the scheduling object and the scheduled object combination is associated with the target control resource set.

21. The method according to claim 20, wherein that the scheduled object combination is associated and/or that at least one of the scheduled objects is associated comprise/comprises one of the following:
first carrier indicator information and second carrier indicator information are the same;
first carrier indicator information and second carrier indicator information partially overlap;
first carrier indicator information comprises second carrier indicator information; and
second carrier indicator information comprises first carrier indicator information, wherein
the first carrier indicator information is carrier indicator information associated with the target control resource set, and the second carrier indicator information is carrier indicator information associated with the scheduled object combination; or the second carrier indicator information is carrier indicator information associated with the at least one of the scheduled objects.

22. The method according to any one of claims 13 to 16, wherein the target control resource set meets at least one of the following:
one scheduling object is associated and only associated with one target control resource set;
one scheduled object combination is associated and only associated with one target control resource set; and
a combination of one scheduling object and the scheduled object combination is associated and only associated with one target control resource set.

23. The method according to any one of claims 13 to 16, wherein the target control resource set meets at least one of the following:
one scheduling object is associated with a plurality of target control resource sets;
one scheduled object combination is associated with a plurality of target control resource sets;
a combination of one scheduling object and the scheduled object combination is associated with a plurality of target control resources;
the scheduled object combinations associated with a plurality of target control resource sets are the same;
the scheduled object combinations associated with at least two of a plurality of target control resource sets are at least partially different; and
at least some of the scheduled objects that are in the scheduled object combination and that are associated with at least two of a plurality of target control resource sets are different.

24. The method according to any one of claims 13 to 16, wherein the target control resource set is associated and only associated with the joint control information; or the target control resource set is only used to send and/or receive the joint control information.

25. A scheduling method, comprising:
determining, by a terminal, a monitoring capability corresponding to a first object and/or a monitoring capability corresponding to a second object, wherein the first object can be scheduled by the second object, and the first object can be scheduled by at least two objects; and
performing, by the terminal, monitoring based on the determined monitoring capability.

26. A scheduling method, comprising:
configuring, by a network side device, a monitoring capability corresponding to a first object and/or a monitoring capability corresponding to a second object for a terminal, wherein the first object can be scheduled by the second object, and the first object can be scheduled by at least two objects.

27. The method according to claim 25 or 26, wherein the monitoring capability meets at least one of the following:
the monitoring capability corresponding to the first object is the same as the monitoring capability corresponding to the second object;
a first monitoring capability corresponding to the second object is the same as a second monitoring capability corresponding to the second object; and
a unit of the monitoring capability is slot wherein
the first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

28. The method according to claim 25 or 26, wherein the monitoring capability meets at least one of the following:
both the monitoring capability corresponding to the first object and the monitoring capability corresponding to the second object are a first capability;
both a first monitoring capability corresponding to the second object and a second monitoring capability corresponding to the second object are a first capability; and
a unit of the monitoring capability is slot, wherein
the first monitoring capability corresponding to the second object is a monitoring capability corresponding to the case that the second object schedules the first object, and the second monitoring capability corresponding to the second object is a monitoring capability corresponding to the case that the second object performs self-scheduling and/or the second object schedules an object other than the first object and the second object.

29. The method according to claim 25 or 26, wherein the monitoring capability meets at least one of the following:
the monitoring capability corresponding to the first object is a first capability;
the monitoring capability corresponding to the second object is a first capability; and
in a case that the monitoring capability corresponding to the first object and/or the monitoring capability corresponding to the second object are/is a first capability, the second object schedules the first object.

30. The method according to claim 25 or 26, wherein in a case that the monitoring capability corresponding to the first object and/or the monitoring capability corresponding to the second object are/is a second capability, the second object does not schedule the first object.

31. A UE capability reporting apparatus, comprising:
a sending module, configured to send UE capability information to a network side device, wherein the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell.

32. A UE capability reporting apparatus, comprising:
a receiving module, configured to receive UE capability information from a terminal side, wherein the UE capability information is used to determine a first frequency domain resource that supports a first cell and/or a second frequency domain resource that supports a second cell in frequency domain resources, the first cell is a cell that can be scheduled by a plurality of cells, and the second cell is at least some cells in the cells that schedule the first cell; and
a configuration module, configured to provide scheduling configuration for the terminal based on the UE capability information.

33. A joint scheduling apparatus, comprising:
a determining module, configured to determine a target control resource set; and
a transmission module, configured to transmit joint control information based on the target control resource set, wherein
the target control resource set is used by a scheduling object to send joint control information, the joint control information is used to schedule a scheduled object combination, and the scheduled object combination comprises one or more scheduled objects.

34. A joint scheduling apparatus, comprising:
a configuration module, used to configure a target control resource set for a terminal, wherein
the target control resource set is used by a scheduling object to send joint control information, the joint control information is used to schedule a scheduled object combination, and the scheduled object combination comprises one or more scheduled objects.

35. A scheduling apparatus, comprising:
a determining module, configured to determine a monitoring capability corresponding to a first object and/or a monitoring capability corresponding to a second object, wherein the first object can be scheduled by the second object, and the first object can be scheduled by at least two objects; and
a monitoring module, configured to perform monitoring based on the determined monitoring capability.

36. A scheduling apparatus, comprising:
a configuration module, used to configure a monitoring capability corresponding to a first object and/or a monitoring capability corresponding to a second object for a terminal, wherein the first object can be scheduled by the second object, and the first object can be scheduled by at least two objects.

37. A terminal, comprising a processor, a memory, and a program or an instruction that is stored in the memory and that can be run on the processor, wherein when the program or the instruction is executed by the processor, the UE capability reporting method according to any one of claims 1 to 10 is implemented, or the joint scheduling method according to any one of claims 13, 14, and 17 to 24 is implemented, or the scheduling method according to any one of claims 25, and 27 to 30 is implemented.

38. A network side device, comprising a processor, a memory, and a program or an instruction that is stored in the memory and that can be run on the processor, wherein when the program or the instruction is executed by the processor, the UE capability reporting method according to either of claims 11 and 12 is implemented, or the joint scheduling method according to any one of claims 15 to 24 is implemented, or the scheduling method according to any one of claims 26 to 30 is implemented.

39. A readable storage medium, wherein the readable storage medium stores a program or an instruction, and when the program or the instruction is executed by a processor, the UE capability reporting method according to any one of claims 1 to 12 is implemented, or the joint scheduling method according to any one of claims 13 to 24 is implemented, or the scheduling method according to any one of claims 25 to 30 is implemented.
